(19) Europäisches Patentamt
European Patent Office
Office européen des brevets

(11) **EP 2 795 589 B1**

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(21) Anmeldenummer: **12812856.8**

(22) Anmeldetag: **19.12.2012**

(51) Int Cl.:
*G07D 7/08* (2006.01)      *G07D 7/12* (2016.01)

(86) Internationale Anmeldenummer:
**PCT/EP2012/005272**

(87) Internationale Veröffentlichungsnummer:
**WO 2013/091855 (27.06.2013 Gazette 2013/26)**

(54) **VERFAHREN UND VORRICHTUNG ZUR PRÜFUNG EINES SICHERHEITSMERKMALS EINES WERTDOKUMENTS**

METHOD AND DEVICE FOR EXAMINING A SECURITY FEATURE OF A VALUE DOCUMENT

PROCÉDÉ ET DISPOSITIF DE CONTRÔLE D'UN ÉLÉMENT DE SÉCURITÉ D'UN DOCUMENT DE VALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2011 DE 102011121911**

(43) Veröffentlichungstag der Anmeldung:
**29.10.2014 Patentblatt 2014/44**

(73) Patentinhaber: **Giesecke & Devrient GmbH 81677 München (DE)**

(72) Erfinder:
• SCHOLZ, Ingo
  **28355 Bremen (DE)**
• DOMKE, Jan
  **85591 Vaterstetten (DE)**

(56) Entgegenhaltungen:
WO-A1-2005/013207      WO-A2-02/10716
WO-A2-2004/055740      DE-A1-102006 053 788

**Beschreibung**

Die vorliegende Erfindung betrifft eine Verfahren zur Prüfung eines Sicherheitsmerkmals eines Wertdokuments, das in einem vorgegebenen Sicherheitsmerkmalsbereich des Wertdokuments vorliegt, insbesondere eines Wasserzeichens, sowie eine entsprechende Vorrichtung zur Prüfung eines Sicherheitsmerkmals eines Wertdokuments, das in einem vorgegebenen Sicherheitsmerkmalsbereich des Wertdokuments vorliegt, insbesondere eines Wasserzeichens.

Unter Wertdokumenten werden dabei blattförmige Gegenstände verstanden, die beispielsweise einen monetären Wert oder eine Berechtigung repräsentieren und daher nicht beliebig durch Unbefugte herstellbar sein sollen. Sie weisen daher nicht einfach herzustellende, insbesondere zu kopierende Sicherheitsmerkmale auf, deren Vorhandensein ein Indiz für die Echtheit, d.h. die Herstellung durch eine dazu befugte Stelle, ist. Wichtige Beispiele für solche Wertdokumente sind Chipkarten, Coupons, Gutscheine, Schecks und insbesondere Banknoten.

Solche Wertdokumente besitzen in der Regel ein blattförmiges Substrat, das beispielsweise als weitere Elemente des Wertdokuments Druck- oder Folienelemente tragen kann.

Solche Wertdokumente, genauer deren Sicherheitsmerkmale, werden beispielsweise mittels entsprechender Vorrichtungen unter anderem auf deren Echtheit geprüft, doch ist die Sicherheit der Prüfung, d. h. die Sicherheit, mit der zwischen echten und gefälschten Wertdokumenten bzw. Sicherheitsmerkmalen der Wertdokumente unterschieden werden kann, je nach Sicherheitsmerkmal nicht so groß, wie es wünschenswert erscheint.

Ein Beispiel hierfür ist die Erkennung von Wasserzeichen, unter denen im Rahmen der vorliegenden Erfindung Sicherheitsmerkmale verstanden werden, die durch eine vorgegebene Variation der Dicke des Substrats des Wertdokuments bei gleicher Dichte, also gleichem Gewicht pro Volumen, gebildet sind. Solche Wasserzeichen sind zwar nur schwer herzustellen, doch gibt es mehr oder weniger gute Fälschungen von Wasserzeichen.

In WO 02/10716 A2 ist ein Verfahren zur Verifikation von Dickenmodulationen, insbesondere Wasserzeichen, in oder auf Blattgut beschrieben. Zur Verminderung des Einflusses von Störungen aus der Umgebung sowie zur Reduktion des Justageaufwands bei der Fertigung und Wartung entsprechender Messsysteme wird das Blattgut mit Schall, insbesondere Ultraschall, beaufschlagt und der durch das Blattgut transmittierte und/oder am Blattgut reflektierte Schall an mehreren Stellen des Blattguts gemessen. Für jede der Stellen wird mindestens ein für den transmittierten und/oder reflektierten Schall charakteristischer Wert erzeugt und die Dickenmodulationen werden durch Vergleich der Werte mit vorgegebenen Referenzwerten verifiziert.

In WO 2004/055740 A2 sind ein Verfahren und eine Vorrichtung für die Überprüfung von Banknoten beschrieben, bei denen Daten aus mindestens zwei unterschiedlichen Messungen der zu überprüfenden Banknoten ausgewertet werden. Dabei wird von einer Überprüfung von Banknoten, bei der Daten aus mindestens zwei unterschiedlichen Messungen der zu überprüfenden Banknoten ausgewertet werden, ausgegangen, wobei eine erste Eigenschaft der zu überprüfenden Banknote aus den Daten mindestens einer ersten Messung abgeleitet wird, mindestens eine zweite Eigenschaft der zu überprüfenden Banknote aus den Daten mindestens einer zweiten Messung abgeleitet wird, eine Korrelation zwischen erster und mindestens zweiter Eigenschaft für gleiche Orte der zu überprüfenden Banknote ermittelt wird, und die erste Eigenschaft erneut abgeleitet wird, wobei an Orten der zu überprüfenden Banknote, für die eine Korrelation zwischen erster und mindestens zweiter Eigenschaft ermittelt wurde, eine veränderte Ableitung der ersten Eigenschaft aus den Daten der mindestens ersten Messung vorgenommen wird.

Der Erfindung liegt daher die Aufgabe zugrunde, ein Verfahren zur Prüfung eines Sicherheitsmerkmals, vorzugsweise Wasserzeichens, eines Wertdokuments anzugeben, das eine gute Prüfung des Sicherheitsmerkmals erlaubt, sowie Mittel zur Durchführung des Verfahrens bereitzustellen.

Die Aufgabe wird gelöst durch ein Verfahren mit den Merkmalen des Anspruchs 1 und insbesondere ein Verfahren zur Prüfung eines vorgegebenen Sicherheitsmerkmals eines Wertdokuments, das in einem vorgegebenen Sicherheitsmerkmalsbereich des Wertdokuments vorliegt, vorzugsweise eines Wasserzeichens, bei dem Pixeldaten erfaßt werden, die ein optisches Bild wenigstens des Sicherheitsmerkmalsbereichs des Wertdokuments mit einer vorgegebenen optischen Ortsauflösung ortsaufgelöst beschreiben, Ultraschalldaten erfaßt werden, die mit einer vorgegebenen Ultraschallortsauflösung ortsaufgelöst eine Ultraschalleigenschaft des Wertdokuments wenigstens in dem Sicherheitsmerkmalsbereich beschreiben, wobei die Ultraschallortsauflösung geringer ist als die optische Ortsauflösung, aus den Pixeldaten erste auflösungsreduzierte Pixeldaten für auflösungsreduzierte Pixel eines ersten auflösungsreduzierten Bildes ermittelt werden, die ein auflösungsreduziertes optisches Bild wenigstens des Sicherheitsmerkmalsbereichs des Wertdokuments beschreiben, dessen optische Ortsauflösung der Ultraschallortsauflösung entspricht, so daß den Ultraschalldaten jeweils zugeordneten Orten erste auflösungsreduzierte Pixeldaten zugeordnet sind, und wenigstens geprüft wird, inwieweit oder ob sich die ersten auflösungsreduzierten Pixeldaten und die Ultraschalldaten entsprechen. Vorzugsweise wird wenigstens in Abhängigkeit von dem Ergebnis der Prüfung ein Vergleichssignal gebildet, das wiedergibt, ob ein Hinweis ermittelt wurde, daß das Sicherheitsmerkmal vorhanden ist, oder ein Hinweis ermittelt wurde, daß das Sicherheitsmerkmal nicht vorhanden ist. Die genannten Schritte werden mittels einer Auswerteeinrichtung durchgeführt.

Die Aufgabe wird weiter gelöst durch eine Vorrichtung zur Prüfung eines vorgegebenen Sicherheitsmerkmals eines Wertdokuments, das in einem vorgegebenen Sicherheitsmerkmalsbereich des Wertdokuments vorliegt, vorzugsweise eines Wasserzeichens, die eine Auswerteeinrichtung aufweist, die zur Ausführung eines erfindungsgemäßen Verfahrens ausgebildet ist. Insbesondere wird die Aufgabe gelöst durch eine Vorrichtung zur Prüfung eines Sicherheitsmerkmals eines Wertdokuments, vorzugsweise eines Wasserzeichens, das in einem vorgegebenen Sicherheitsmerkmalsbereich des Wertdokuments vorliegt, die eine Auswerteeinrichtung aufweist, die dazu ausgebildet ist, Pixeldaten zu erfassen, die ein optisches Bild wenigstens des Sicherheitsmerkmalsbereichs des Wertdokuments mit einer vorgegebenen optischen Ortsauflösung ortsaufgelöst beschreiben, Ultraschalldaten zu erfassen, die mit einer vorgegebenen Ultraschallortsauflösung ortsaufgelöst eine Ultraschalleigenschaft des Wertdokuments wenigstens in dem Sicherheitsmerkmalsbereich beschreiben, wobei die Ultraschallortsauflösung geringer ist als die optische Ortsauflösung, aus den Pixeldaten erste auflösungsreduzierte Pixeldaten für auflösungsreduzierte Pixel eines ersten auflösungsreduzierten Bildes zu ermitteln, die ein auflösungsreduziertes optisches Bild wenigstens des Sicherheitsmerkmalsbereichs des Wertdokuments beschreiben, dessen optische Ortsauflösung der Ultraschallortsauflösung entspricht, so daß den Ultraschalldaten jeweils zugeordneten Orten erste auflösungsreduzierte Pixeldaten zugeordnet sind, wenigstens zu prüfen, inwieweit sich die ersten auflösungsreduzierten Pixeldaten und die Ultraschalldaten entsprechen. Vorzugsweise ist die Auswerteeinrichtung weiter dazu ausgebildet, wenigstens in Abhängigkeit von dem Ergebnis der Prüfung ein Vergleichssignal zu bilden, das wiedergibt, ob ein Hinweis ermittelt wurde, daß das Sicherheitsmerkmal vorhanden ist, oder ein Hinweis ermittelt wurde, daß das Sicherheitsmerkmal nicht vorhanden ist.

Das Vergleichssignal kann allein zur Speicherung eines entsprechenden Wertes dienen, es kann aber auch direkt zur Klassifizierung des geprüften Wertdokuments verwendet werden.

Die Auswerteeinrichtung kann vorzugsweise eine Datenverarbeitungseinrichtung aufweisen, die einen Prozessor und einen Speicher umfassen kann, in dem Instruktionen eines Computerprogramms gespeichert sind, bei deren Ausführung durch den Prozessor das erfindungsgemäße Verfahren durchgeführt wird. Gegenstand der Erfindung ist daher auch ein Computerprogramm zur Prüfung eines Sicherheitsmerkmals eines Wertdokuments, das in einem vorgegebenen Sicherheitsmerkmalsbereich des Wertdokuments vorliegt, das Instruktionen umfaßt, bei deren Ausführungen durch eine Datenverarbeitungseinrichtung ein Verfahren nach einem der vorhergehenden Ansprüche ausgeführt wird.

Weitere Gegenstand der Erfindung ist ein Datenträger, auf dem ein erfindungsgemäßes Computerprogramm gespeichert ist. Der Datenträger ist dabei ein physischer Gegenstand, beispielsweise ein optischer Datenträger oder ein Flachspeicher oder ähnliches.

Die Erfindung betrifft die Prüfung eines vorgegebenen Sicherheitsmerkmals eines Wertdokuments, d. h. die Prüfung, ob ein Wertdokument das vorgegebene Sicherheitsmerkmal aufweist. Vorzugsweise ist das Sicherheitsmerkmal ein Sicherheitsmerkmal, das durch eine vorgegebene örtliche Variation bzw. Ortsabhängigkeit der Dicke und/oder des Flächengewichts des Wertdokuments einerseits und eine entsprechende vorgegebene örtliche Variation bzw. Ortsabhängigkeit wenigstens einer optischen Eigenschaft andererseits gebildet ist. Die entsprechenden Variation der wenigstens einen optischen Eigenschaft kann beispielsweise eine entsprechende Variation des Transmissionsvermögens für optische Strahlung in einem vorgegebenen Wellenlängenbereich sein. Besonders bevorzugt sind die Variationen örtlich stark korreliert.

Besonders bevorzugt ist das Sicherheitsmerkmal ein Wasserzeichen. Besonders bevorzugt ist das Wasserzeichen ein Balkenwasserzeichen, das sich typischerweise durch ein besonders ausgeprägtes Dickenprofil auszeichnet.

Durch die Verwendung von sowohl ortsaufgelösten optischen als auch ortsaufgelösten Ultraschalleigenschaften können Schwierigkeiten bei der Prüfung allein mit einem optischen Sensor oder allein mit einem Ultraschallsensor wenigstens gemildert oder gar beseitigt werden. Insbesondere braucht bei dem Verfahren nicht zuerst die Anwesenheit des Sicherheitsmerkmals mittels eines ersten Sensors festgestellt zu werden, die dann durch eine Untersuchung mit einem zweiten Sensor bestätigt oder verbessert wird. Vielmehr werden die Pixeldaten und die Ultraschalldaten zusammen ausgewertet, ohne daß eine Erkennung des Sicherheitsmerkmals bereits stattgefunden haben müßte.

Dem Verfahren liegen die Pixeldaten und die Ultraschalldaten zugrunde.

Wenigstens zur Erfassung der Pixeldaten und der Ultraschalldaten kann die Auswerteeinrichtung wenigstens eine entsprechende Datenschnittstelle aufweisen, über die die Pixeldaten bzw. die Ultraschalldaten erfaßt werden können. Vorzugsweise weist die Vorrichtung weiter einen optischen Sensor, der dazu ausgebildet ist, für das Wertdokument Pixeldaten zu erzeugen, die ein mit einer vorgegebenen optischen Ortsauflösung ortsaufgelöstes optisches Bild wenigstens des Sicherheitsmerkmalsbereichs des Wertdokuments beschreiben, und einen Ultraschallsensor, der dazu ausgebildet ist, für das Wertdokument Ultraschalldaten zu erzeugen, die mit einer vorgegebenen Ultraschallortsauflösung ortsaufgelöst eine Ultraschalleigenschaft des Wertdokuments wenigstens in dem Sicherheitsmerkmalsbereich beschreiben, wobei die Ultraschallortsauflösung geringer ist als die optische Ortsauflösung, auf, und der optische Sensor, der Ultraschallsensor und die Auswerteeinrichtung sind so ausgebildet, daß die Auswerteeinrichtung die für das Wertdokument gebildeten Pixeldaten als Pixeldaten und die für das Wertdokument gebildeten Ultraschalldaten als Ultraschalldaten bei der Durchführung des Verfahrens verwendet. Bei dem Verfahren werden vorzugsweise die Pixeldaten mittels eines optischen Sensors, der dazu ausgebildet ist, für das Wertdokument Pixeldaten zu erzeugen, die ein mit einer vorgegebenen optischen Ortsauflösung ortsaufgelöstes optisches Bild des Wertdokuments beschreiben, und die Ultraschalldaten mittels eines Ultraschallsensors, der dazu ausgebildet ist, für das Wertdokument Ultraschalldaten zu erzeugen, die mit einer vorgegebenen Ultraschallortsauflösung ortsaufgelöst eine Ultraschalleigenschaft des Wertdokuments wenigstens in dem Sicherheitsmerkmalsbereich beschreiben, wobei die Ultraschallortsauflösung geringer ist als die optische Ortsauflösung, gebildet. Diese können dann, vorzugsweise über die erwähnte wenigstens eine Datenschnittstelle, d.h. Datenschnittstelle oder Datenschnittstellen, erfaßt werden.

Die Pixeldaten beschreiben ein optisches Bild wenigstens des Sicherheitsmerkmalsbereichs, der wenigstens das Sicherheitsmerkmal aufweist, aber auch größer sein kann. Das optische Bild ist ein Bild in einem oder mehreren vorgegebenen Wellenlängenbereichen des optischen Spektrums, d. h. des Spektrums vom Ultravioletten bis zum Infraroten. Das Bild kann ein Remissionsbild sein, vorzugsweise ist es jedoch ein Transmissionsbild, besonders bevorzugt ein Transmissionsbild im Bereich der sichtbaren Strahlung. Der optische Sensor ist vorzugsweise zur Erfassung entsprechender Bilder ausgebildet.

Unter Ultraschall wird im Rahmen der vorliegenden Erfindung Schall mit einer Frequenz oberhalb von 20 kHz verstanden. Vorzugsweise kann Ultraschall in einem vorgegebenen Frequenzbereich, besonders bevorzugt im Bereich zwischen 40 kHz und 800 kHz, ganz besonders bevorzugt im Bereich zwischen 100 kHz und 450 kHz verwendet werden. Der Ultraschallsensor ist dann vorzugsweise zur Abgabe des Ultraschalls in dem vorgegebenen Frequenzbereich ausgebildet, was durch Wahl entsprechender als Sender und Empfänger dienender Ultraschallwandler und entsprechender Ansteuerung erreicht werden kann. Zur Erfassung der Ultraschalleigenschaft kann der Ultraschall kontinuierlich oder vorzugsweise in Pulsen auf das Wertdokument abgegeben und der daraufhin von dem Wertdokument ausgehende Ultraschall erfaßt werden. Werden Ultraschallpulse verwendet, so wird dabei unter der Frequenz der mit den frequenzabhängigen Amplituden gewichtete Mittelwert über die Frequenzen des Pulses oder die Frequenz, bei der die Amplitude maximal ist, verstanden.

Die Ultraschalleigenschaft muß ortsaufgelöst ermittelt werden, d. h. die Ultraschalleigenschaft wird für verschiedene Meß- bzw. Abtastbereiche des Wertdokuments ermittelt, wobei sich wenigstens einige der Meß- bzw. Abtastbereiche berühren oder überlappen können, aber nicht müssen. Für jeden der Meßbereiche und damit einen den jeweiligen Meßbereich repräsentierenden Ort auf dem Wertdokument kann ein die Ultraschalleigenschaft darstellender Meßwert gebildet werden, der weiterverarbeitet werden kann. Die bei der Messung gebildeten und bei dem Verfahren erfaßten Ultraschalldaten umfassen die Meßwerte für die Orte, für die die Meßwerte erfaßt wurden, und vorzugsweise jeweils zugeordnete Ortsinformationen, die sich aber auch aus der Anordnung der Meßwerte in einem Wertefeld ergeben können. Der Einfachheit wird im Folgenden von den Ultraschalldaten zugeordneten Orten gesprochen; ein Ultraschalldaten für einen Ort zugeordneter Ort ist der Ort, der durch die Ortsinformation der Ultraschalldaten für den Ort bestimmt ist.

Als Ultraschalleigenschaft können prinzipiell beliebige geeignete Eigenschaften verwendet werden, die die Wechselwirkung des Wertdokuments mit Ultraschall charakterisieren. Gemäß einer bevorzugten Ausführungsform kann als Ultraschalleigenschaft die Transmission bzw. das Transmissionsvermögen für Ultraschall in dem vorgegebenen Frequenzbereich verwendet werden. Dann kann zum Ermitteln der wenigstens einen Ultraschalleigenschaft Ultraschall auf das Wertdokument abgegeben und der von dem Wertdokument transmittierte Ultraschall erfaßt werden. Dazu kann bei der Einrichtung der Ultraschallsensor dazu ausgebildet sein, Ultraschall auf das Wertdokument abzugeben und von dem Wertdokument transmittierten Ultraschall zu erfassen.

Die Ultraschallortsauflösung der Ultraschalldaten ist geringer als die optische Ortsauflösung der Pixeldaten. Unter der Ultraschallortsauflösung von Ultraschalldaten bzw. Ortsauflösung von Pixeldaten kann insbesondere der kleinste Abstand von Orten verstanden werden, denen Ultraschalldaten bzw. Pixeldaten zugeordnet sind. Der Unterschied dieser Abstände bzw. Ortsauflösungen kann insbesondere im Bereich eines Faktors von fünf oder mehr liegen.

Erfindungsgemäß werden daher aus den Pixeldaten auflösungsreduzierte Pixeldaten für auflösungsreduzierte Pixel eines auflösungsreduzierten Bildes gebildet, dessen Ortsauflösung der Ultraschallortsauflösung entspricht, so daß den Ultraschalldaten jeweils zugeordneten Orten erste auflösungsreduzierte Pixeldaten zugeordnet sind. Vorzugsweise sind die auflösungsreduzierten Pixel so gewählt, daß sie in Form und Größe jeweils der Form und Größe der Meß- bzw. Abtastbereiche entsprechen, für die die Ultraschalleigenschaft ermittelt wird. Besonders bevorzugt sind die Form und Größe eines auflösungsreduzierten Pixels so gewählt, daß es einen Abtastbereich möglichst eng umschließt. Die Größe und Form der Abtastbereiche kann durch Simulationen oder Versuche ermittelt werden.

Eine bevorzugte Weiterbildung sieht vor, daß bei dem Verfahren verschiedene Versetzungsvektoren für das optische Bild vorgegeben werden, für jeden der Versetzungsvektoren aus den Pixeldaten des optischen Bildes auflösungsreduzierte Pixeldaten für ein dem Versetzungsvektor zugeordnetes, weiteres auflösungsreduziertes Bild ermittelt werden, die ein auflösungsreduziertes optisches Bild des Sicherheitsmerkmalsbereichs des Wert-dokuments beschreiben, dessen optische Ortsauflösung der Ultraschallortsauflösung entspricht, so daß den Ultraschalldaten jeweils zugeordneten Orten für den Sicherheitsmerkmalsbereich auflösungsreduzierte Pixeldaten des dem Versetzungsvektor zugeordneten weiteren auflösungsreduzierten Bildes zugeordnet sind. Dabei sind die zur Ermittlung der weiteren auflösungsreduzierten Pixeldaten für einen jeweiligen Ort verwendeten Pixeldaten des optischen Bildes Pixeldaten für Pixel, die gegenüber den zur Ermittlung der ersten auflösungsreduzierten Pixeldaten für den jeweiligen Ort verwendeten Pixeln des optischen Bildes um den vorgegebenen Versetzungsvektor versetzt sind. Es wird weiter geprüft, inwieweit oder ob sich die weiteren auflösungsreduzierten ortsaufgelösten Pixeldaten für die den jeweiligen Versetzungsvektoren zugeordneten auflösungsreduzierten Bilder und die ortsaufgelösten Ultraschalldaten entsprechen, und das Vergleichssignal wird zusätzlich in Abhängigkeit von der weiteren Prüfung gebildet. Diese Schritte können mittels der schon erwähnten Auswerteeinrichtung durchgeführt werden. Die Auswerteeinrichtung der Vorrichtung kann dann zur Durchführung der in diesem Absatz genannten Schritte ausgebildet sein. Insgesamt werden bei dieser Weiterbildung also mehrere auflösungsreduzierte Bilder erzeugt, die die gleiche Ortsauflösung aufweisen, sich aber dadurch unterscheiden, aus welchen Pixeldaten die auflösungsreduzierten Pixeldaten gebildet werden. Unter einem Versetzungsvektor wird dabei die Angabe von zwei Längen in zwei vorgegebenen, nicht parallelen Richtungen in der Ebene des Bildes oder die Angabe eines Winkels zwischen dem Vektor und einer vorgegebenen Achse und einer Länge, der Länge des Vektors, verstanden. Liegen die Orte auf einem Gitter, so liegen die Richtungen vorzugsweise auf entsprechenden Richtungen der Gitterachsen.

Vorzugsweise wird das Vergleichssignal so gebildet, daß ermittelt wird, bei welcher der Prüfungen, d. h. für welches des ersten auflösungsreduzierten Bildes und der den Versetzungsvektoren zugeordneten auflösungsreduzierten Bilder die auflösungsreduzierten Pixeldaten am besten den Ultraschalldaten entsprochen haben, und das Vergleichssignal wird in Abhängigkeit vom Ergebnis dieser Prüfung gebildet. Hierzu kann die Auswerteeinrichtung entsprechend ausgebildet sein.

Die verschiedenen Versetzungsvektoren können an sich beliebig gewählt werden. Besonders bevorzugt liegen bei dem Verfahren die Versetzungsvektoren auf einem durch die Pixel des optischen Bildes gebildeten Gitter. Bei der Vorrichtung ist hierzu die Auswerteeinrichtung entsprechend ausgebildet Dabei ist die Länge der Versetzungsvektoren vorzugsweise nicht größer als das Doppelte der Ortsauflösung der Ultraschalldaten. Vorzugsweise ist die Anzahl der verschiedenen Versetzungsvektoren nicht größer als das Quadrat des Verhältnisses der Ortsauflösung der Ultraschalldaten und der Ortsauflösung der Pixeldaten. Weiterhin umfassen die Versetzungsvektoren vorzugsweise Paare von Versetzungsvektoren, die jeweils entgegengesetzte Richtungen aufweisen.

Die Prüfung, inwieweit oder ob sich die Ultraschalldaten und die Pixeldaten für eines der auflösungsreduzierten Bilder, d.h. das erste auflösungsreduzierte Bild und, soweit vorhandenen, das wenigstens eine weitere auflösungsreduzierte Bild für den Sicherheitsmerkmalsbereich entsprechen, kann auf unterschiedliche Art und Weise erfolgen. Vorzugsweise wird bei dem Verfahren zum Prüfen, inwieweit oder ob sich die auflösungsreduzierten Pixeldaten und die Ultraschalldaten entsprechen, ein Wert einer, vorzugsweise normierten, Kreuzkorrelation zwischen den auflösungsreduzierten Pixeldaten und den Ultraschalldaten ermittelt, und besonders bevorzugt bei der Bildung des Vergleichssignals die größte Kreuzkorrelationen, d. h. der größte Wert der Kreuzkorrelationen, ermittelt, die ermittelte größte Kreuzkorrelation mit einem vorgegebenen Schwellwert verglichen. In Abhängigkeit von dem Vergleich mit dem Schwellwert kann dann das Vergleichssignal gebildet werden. Bei der Vorrichtung ist hierzu die Auswerteeinrichtung entsprechend ausgebildet. Wird nur ein bzw. das erste auflösungsreduzierte Bild verwendet, ist die größte Kreuzkorrelation, d. h. der größte Wert der Kreuzkorrelation, die einzige ermittelte Kreuzkorrelation. Andernfalls werden für die auflösungsreduzierten Pixeldaten für das erste auflösungsreduzierte Bild und die den Versetzungsvektoren zugeordneten auflösungsreduzierten Pixeldaten jeweils die Kreuzkorrelationen, d.h. die Werte der Kreuzkorrelation, ermittelt, unter diesen Kreuzkorrelationen die größte gesucht und bei dem Vergleich mit dem Schwellwert verwendet. Der Schwellwert kann durch Untersuchung von Referenzwertdokumenten desselben Typs, vorzugsweise auch bekannten Fälschungen solcher Referenzwertdokumente, ermittelt werden. Dieses Vorgehen bietet den Vorteil, daß es einfach und schnell durchführbar ist.

Das auflösungsreduzierte Bild, d. h. das erste oder wenigstens ein weitere auflösungsreduzierte Bild kann auf beliebige, geeignete Art und Weise ermittelt werden.

Dabei können die Pixeldaten des optischen Bildes unverändert verwendet werden. Vorzugsweise kann bei dem Verfahren aber vor der Ermittlung der auflösungsreduzierten Pixeldaten eine Glättung der Pixeldaten des optischen Bildes, wenigstens im Sicherheitsmerkmalsbereich, vorgenommen werden. Bei der Vorrichtung kann dann dazu die Auswerteeinrichtung entsprechend ausgebildet sein. Diese Maßnahme bietet den Vorteil, daß bei geeigneter Auslegung des zur Glättung der Pixeldaten verwendeten Verfahrens, beispielsweise einer Tiefpassfilterung, Rauschen in den Pixeldaten des optischen Bildes wenigstens teilweise unterdrückt werden kann.

Im einfachsten Fall können aus den Pixeldaten des optischen Bildes für einen Ort der Ultraschalldaten als Pixeldaten des auflösungsreduzierten Bildes die Pixeldaten gesetzt werden, denen der Ort der Ultraschalldaten am nächsten ist bzw. denen der Ort der Ultraschalldaten bei einer Versetzung um den Versetzungsvektor, dem das auflösungsreduzierte Bild zugeordnet ist, am nächsten ist.

Gemäß einer bevorzugten Ausführungsform werden bei dem Verfahren jedoch zur Ermittlung der auflösungsreduzierten Pixeldaten für ein auflösungsreduziertes Pixel bzw. weiteres auflösungsreduziertes Pixel Pixeldaten von Pixeln des optischen Bildes verwendet, die einen Pixelblock bilden, dessen größter Durchmesser größer als die dreifache Ortsauflösung des optischen Bildes und kleiner als das 1,2-fache der Ortsauflösung des Ultraschallsensors ist. Bei der Vorrichtung kann die Auswerteeinrichtung dann entsprechend ausgebildet sein. Unter dem größten Durchmesser des Pixelblocks wird dabei der größte Abstand zweier Randpixel des Pixelblocks verstanden. Unter einem Pixelblock wird eine Menge von Pixeln verstanden, von denen jeweils wenigstens zwei unmittelbar benachbart sind. Vorzugsweise bilden die Orte, denen die Pixel des Pixelblocks entsprechen ein Gebiet von einer Form, die der Anordnung der Pixel in dem optischen Bild, besonders bevorzugt einem Rechteck- oder Quadratgitter, oder der Anordnung der zu einem Ort der Ultraschalldaten des Ultraschallbildes unmittelbar benachbarten Orte der Ultraschalldaten des Ultraschallbildes, beispielsweise ein Rechteck- oder Quadratgitter oder ein hexagonales Gitter, entspricht

Gemäß einer anderen bevorzugten Ausführungsform werden bei dem Verfahren zur Ermittlung der auflösungsreduzierten Pixeldaten für ein auflösungsreduziertes Pixel bzw. weiteres auflösungsreduziertes Pixel Pixeldaten von Pixeln des optischen Bildes verwendet, die einen Pixelblock bilden, dessen größter Durchmesser der Ortsauflösung des Ultraschallsensors entspricht. Bei der Vorrichtung kann die Auswerteeinrichtung dann entsprechend ausgebildet sein. Besonders bevorzugt liegt der Ort bzw. der um den Versetzungsvektor versetzte Ort in der Mitte des Pixelblocks. In Bezug auf die Form der Pixelblöcke gilt das in dem vorhergehenden Absatz ausgeführte.

Gemäß einer Ausführungsform kann bei dem Verfahren bei der Ermittlung der auflösungsreduzierten Pixeldaten ein einfacher oder gewichteter arithmetischer Mittelwert von Pixeldaten des optischen Bildes gebildet werden. Insbesondere kann dazu für einen Ort des auflösungsreduzierten Bildes der einfache oder gewichtete arithmetische Mittelwert über die Pixeldaten der Pixel des in den beiden vorhergehenden Absätzen genannten Pixelblocks gebildet werden. Die Ermittlung der auflösungsreduzierten Pixeldaten kann dann besonders schnell erfolgen.

Die Anzahl der Versetzungsvektoren ist prinzipiell beliebig. Tendenziell verbessert sich die Prüfung bei zunehmender Anzahl von Versetzungsvektoren. Bei Verwendung von Pixelblöcken kann bei dem Verfahren die Anzahl der Versetzungsvektoren vorzugsweise größer als ein sechzehntel der Anzahl der Pixel des Pixelblocks, vorzugsweise größer als ein neuntel der Anzahl der Pixel des Pixelblocks, mindestens aber vier sein. Bei der Vorrichtung kann dann die Auswerteeinrichtung entsprechend ausgebildet sein.

Die Erfindung wird im Folgenden noch weiter beispielhaft an Hand der Zeichnungen erläutert. Es zeigen:

Fig. 1        eine schematische Darstellung einer Banknotenbearbeitungsvorrichtung,

Fig. 2        eine schematische Darstellung eines Ultraschallsensors der Banknotenbearbeitungsvorrichtung in Fig. 1 mit einer Steuer- und Auswerteeinrichtung in einer Ansicht entlang einer Transportrichtung von Banknoten,

Fig. 3        eine schematische Darstellung von Ultraschallsendern des Ultraschallsensors in Fig. 2 in einer Ebene parallel zur Ebene einer zu untersuchenden Banknote,

Fig. 4        eine schematische teilweise Darstellung einer Banknote mit durch die Ultraschallsender des Ultraschallsensors in Fig. 2 beschallten Flecken bzw. Abtastbereichen,

Fig. 5        eine schematische Darstellung einer Banknote mit Orten bzw. Abtastbereichen, für die Transmissionswerte mittels des Ultraschallsensors in Fig. 3 ermittelt wurden, sowie entsprechende auflösungsreduzierte Pixel,

Fig. 6        eine schematische Darstellung eines optischen Transmissionssensors der Banknotenbearbeitungsvorrichtung in Fig. 1,

Fig. 7        eine schematische Darstellung der Pixel eines mit dem optischen Transmissionssensor in Fig. 6 erfaßten Transmissionsbildes der Banknoten in Fig. 5,

Fig. 8        eine schematische Darstellungen einer echten Banknote mit einem Balkenwasserzeichen,

Fig. 9        ein vereinfachtes Ablaufdiagramm für ein Beispiel eines Verfahrens zur Prüfung eines vorgegebenen Sicherheitsmerkmals eines Wertdokuments in Form eines Wasserzeichens, das in einem vorgegebenen Sicherheitsmerkmalsbereich des Wertdokuments vorliegt, und

Fig. 10a        bis c Fig. 5 und 7 entsprechende Gegenüberstellungen von Ultraschalldaten und auflösungsreduzierten Pixeln für die Banknote in Fig. 8 einerseits und die zur Ermittlung der auflösungsreduzierten Pixel verwendeten Pixel in dem erfaßten optischen Transmissionsbild andererseits ohne Versatz (a) und für zwei verschiedene Versetzungsvektoren (b und c).

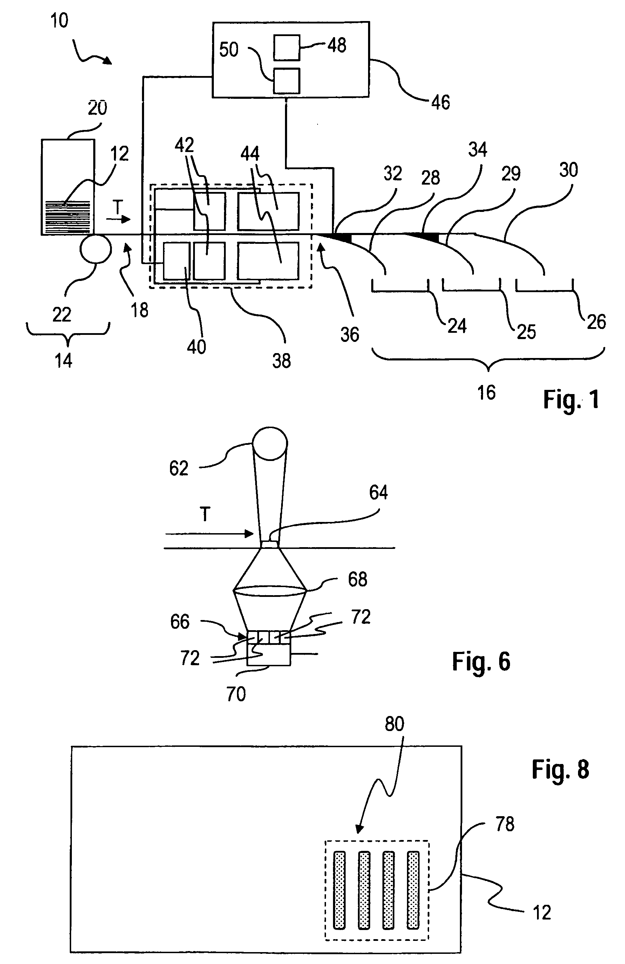

Eine Wertdokumentbearbeitungsvorrichtung 10 in Fig. 1, im Beispiel eine Vorrichtung zur Bearbeitung von Wertdokumenten 12 in Form von Banknoten, ist zur Sortierung von Wertdokumenten in Abhängigkeit von der Erkennung der Echtheit von bearbeiteten Wertdokumenten ausgebildet.

Sie verfügt über eine Zuführeinrichtung 14 zur Zuführung von Wertdokumenten, eine Ausgabeeinrichtung 16 zur Aufnahme bearbeiteter, d. h. sortierter Wertdokumente, und eine Transporteinrichtung 18 zum Transportieren von vereinzelten Wertdokumenten von der Zuführeinrichtung 14 zu der Ausgabeeinrichtung 16.

Die Zuführeinrichtung 14 umfaßt im Beispiel ein Eingabefach 20 für einen Wertdokumentstapel und einen Vereinzeler 22 zur Vereinzelung von Wertdokumenten aus dem Wertdokumentstapel in dem Eingabefach 20.

Die Ausgabeeinrichtung 16 umfaßt im Beispiel drei Ausgabeabschnitte 24, 25 und 26, in die bearbeitete Wertdokumente sortiert nach dem Ergebnis der Bearbeitung sortiert werden können. Im Beispiel umfaßt jeder der Abschnitte ein Stapelfach und ein nicht gezeigtes Stapelrad, mittels dessen zugeführte Wertdokumente in dem Stapelfach abgelegt werden können.

Die Transporteinrichtung 18 verfügt über wenigstens zwei, im Beispiel drei Zweige 28, 29 und 30, an deren Enden jeweils einer der Ausgabeabschnitte 24 bzw. 25 bzw. 26 angeordnet ist, und an den Verzweigungen über durch Stellsignale steuerbare Weichen 32 und 34, mittels derer Wertdokumente in Abhängigkeit von Stellsignalen den Zweigen 28 bis 30 und damit den Ausgabeabschnitten 24 bis 26 zuführbar sind.

An einem durch die Transporteinrichtung 18 definierten Transportpfad 36 zwischen der Zuführeinrichtung 14, im Beispiel genauer dem Vereinzeler 22, und der in Transportrichtung ersten Weiche 32 nach dem Vereinzeler 22 ist eine Sensoreinrichtung 38 angeordnet, die während des Vorbeitransports von Wertdokumenten physikalische Eigenschaften der Wertdokumente mißt und die Meßergebnisse wiedergebende Sensorsignale bildet. In diesem Beispiel verfügt die Sensoreinrichtung 38 über drei Sensoren, nämlich einen optischen Remissionssensor 40, der ein Remissionsfarbbild des Wertdokuments erfaßt, einen optischen Transmissionssensor 42, der ein Transmissionsbild des Wertdokuments erfaßt, und einen Transmissionsultraschallsensor 44, der ortsaufgelöst Ultraschalltransmissionseigenschaften des Wertdokuments erfaßt bzw. mißt und nur im Folgenden der Einfachheit halber nur als Ultraschallsensor bezeichnet wird.

Eine Steuer- und Auswerteeinrichtung 46 ist über Signalverbindungen mit der Sensoreinrichtung 38 und der Transporteinrichtung 18, insbesondere den Weichen 32 und 34, verbunden. In Verbindung mit der Sensoreinrichtung 38 klassifiziert sie in Abhängigkeit von den Sensorsignalen der Sensoreinrichtung 38 für ein Wertdokument in eine von vorgegebenen Echtheitsklassen und steuert durch Abgabe von Stellsignalen die Transporteinrichtung 18, hier genauer die Weichen 32 bzw. 34 so an, daß das Wertdokument entsprechend seiner bei der Klassifizierung ermittelten Klasse in einen der Klasse zugeordneten Ausgabeabschnitt der Ausgabeeinrichtung 16 ausgegeben wird. Die Zuordnung zu einer der vorgegebenen Echtheitsklassen bzw. die Klassifizierung erfolgt dabei in Abhängigkeit von wenigstens einem vorgegebenen Echtheitskriterium.

Die Steuer- und Auswerteeinrichtung 46 verfügt dazu insbesondere neben entsprechenden in den Figuren nicht gezeigten Datenschnittstellen für die Sensoreinrichtung 38 bzw. deren Sensoren über einen Prozessor 48 und einen mit dem Prozessor 48 verbundenen Speicher 50, in dem wenigstens ein Computerprogramm mit Programmcode gespeichert ist, bei dessen Ausführung der Prozessor 48 die Vorrichtung steuert bzw. die Sensorsignale, insbesondere zur Ermittlung einer Echtheitsklasse eines bearbeiteten Wertdokuments, auswertet und entsprechend der Auswertung die Transporteinrichtung 18 ansteuert.

Genauer erfassen die Sensoren während des Vorbeitransports des Wertdokuments entsprechend ihrer Funktion Abtastbereichseigenschaften von durch die Relativlage der Sensoren zu der Banknote bestimmten Abtastbereichen auf der Banknote, wobei die entsprechenden Sensorsignale gebildet werden. Jeder der Sensoren kann dabei eine andere räumliche Auflösung aufweisen, d.h. die Größe und Verteilung der erfaßten Abtastbereiche auf der Banknote kann in Abhängigkeit von dem jeweiligen Sensor und der verwendeten Transportgeschwindigkeit variieren. Jedem der Abtastbereiche ist dabei ein Ort zugeordnet, der die Lage der Abtastbereiche für den jeweiligen Sensor zueinander und/oder relativ zu der Banknote wiedergibt.

Die Steuer- und Auswerteeinrichtung 46 ermittelt aus den analogen oder digitalen Sensorsignalen der Sensoren der Sensoreinrichtung 38 bei einer Sensorsignalauswertung wenigstens eine Abtastbereichseigenschaft und/oder wenigstens eine Wertdokumenteigenschaft, die für die Überprüfung der Banknoten in Bezug auf deren Echtheit relevant ist. Vorzugsweise werden mehrere dieser Eigenschaften ermittelt In diesem Beispiel werden als optische Abtasteigenschaften ein Transmissionsbild und ein Remissionsbild und als akustische Eigenschaft die Ultraschalltransmission der Abtastbereiche ermittelt.

In Abhängigkeit von den Abtastbereichseigenschaften ermittelt die Steuerund Auswerteeinrichtung 46 für die verschiedenen Sensoren jeweils Echtheitssignale, die darstellen, ob die ermittelten Abtastbereichs- bzw.

Wertdokumenteigenschaften einen Hinweis auf die Echtheit des Wertdokuments darstellen oder nicht. In Folge dieser Signale können entsprechende Daten in der Steuer- und Auswerteeinrichtung 46 zur späteren Verwendung gespeichert werden. In Abhängigkeit von den Echtheitssignalen ermittelt die Steuer- und Auswerteeinrichtung 46 dann ein Gesamtergebnis für die Echtheitsprüfung gemäß einem vorgegebenen Gesamtkriterium und bildet in Abhängigkeit von dem Ergebnis das Steuersignal für die Transporteinrichtung 18.

Zur Bearbeitung von Wertdokumenten 12 werden in das Eingabefach 20 als Stapel oder einzeln eingelegte Wertdokumente 12 von dem Vereinzeler 22 vereinzelt und vereinzelt der Transporteinrichtung 18 zugeführt, die die vereinzelten Wertdokumente 12 an der Sensoreinrichtung 38 vorbeitransportiert. Diese erfaßt die Eigenschaften der Wertdokumente 12, wobei Sensorsignale gebildet werden, die die Eigenschaften des jeweiligen Wertdokuments wiedergeben. Die Steuer- und Auswerteeinrichtung 46 erfaßt die Sensorsignale, ermittelt in Abhängigkeit von diesen eine Echtheitsklasse des jeweiligen Wertdokuments und steuert in Abhängigkeit von dem Ergebnis die Weichen so an, daß die Wertdokumente entsprechend der ermittelten Echtheitsklasse in einen der jeweiligen Echtheitsklasse zugeordneten Ausgabeabschnitt transportiert wird.

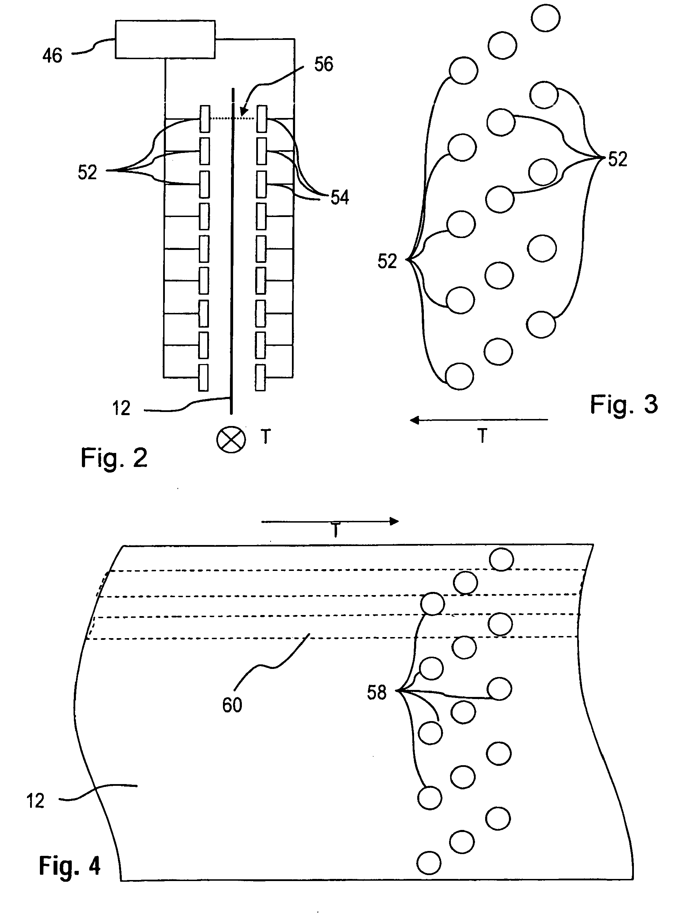

Zur Ermittlung einer Echtheitsklasse auf der Basis von Ultraschalleigenschaften dient unter anderem der Transmissionsultraschallsensor 44, der im Beispiel folgendermaßen aufgebaut ist (vgl. Fig. 2 und 3).

Der Ultraschallsensor 44 verfügt über mehrere, sowohl quer zu einer Transportrichtung T der Wertdokumente 12 als auch längs zu dieser im wesentlichen in einer Ebene parallel zu einer entlang des Transportpfads 36 des transportierten Wertdokuments 12 angeordnete, von der Steuer- und Auswerteeinrichtung 46 angesteuerte Ultraschallwandler 52 zur Abgabe von Ultraschallpulsen auf die Banknote. Diese Ultraschallwandler 52 dienen somit als Ultraschallsender.

Den Ultraschallwandlern bzw. -sendern 52 in Bezug auf den Transportpfad 36 gegenüber sind in gleicher Zahl als Ultraschallempfänger dienende Ultraschallwandler 54, die mit der Steuer- und Auswerteeinrichtung 46 über in den Figuren nicht gezeigte Schnittstellen und schematisch gezeigte Signalverbindungen so angeordnet, daß diese von einem entlang des Transportpfads 36 transportierten Wertdokument 12 ausgehenden, durch Beschallung mit Ultraschallpulsen der Ultraschallsender 52 hervorgerufene Ultraschallwellen empfangen können.

Jedem der Ultraschallsender 52 ist dabei einer der Ultraschallempfänger 54 so zugeordnet, daß zwischen diesen eine, in diesem Beispiel wenigstens näherungsweise orthogonal zu einem entlang des Transportpfads 36 transportierten Wertdokument 12 verlaufende, Ultraschallstrecke 56 ergibt, entlang derer ein von dem jeweiligen Ultraschallsender 52 abgegebener Ultraschallpuls zu dem diesem zugeordneten Ultraschallempfänger 54 läuft. Mit jedem Paar von Ultraschallsendern und diesen zugeordneten Ultraschallempfängern bzw. mit jeder Ultraschallstrecke 56 in Verbindung mit der Steuer- und Auswerteeinrichtung 46 ist damit ein Wert für die Ultraschalltransmission des Wertdokuments 12 an dem mit dem Ultraschall beschallten Ort ermittelbar, der durch einen Ultraschalltransmissionsmeßwert beschrieben wird.

Die Ultraschallwandler 52 bzw. 54 sind so ausgebildet, daß sie zur Abgabe bzw. zum Empfang von Ultraschallpulsen mit einer Dauer im Bereich von im Beispiel etwa 30 $\mu$s und einer Ultraschallfrequenz, d.h. einem Amplitudenmaximum des Spektrums des Ultraschallpulses, von im Beispiel etwa 400 kHz gut geeignet sind. Weiter sind sie so dimensioniert, daß jeweils ein auf einem entlang des Transportpfads 36 transportierten Wertdokument 12 bei Beschallung mit den Ultraschallpulsen beschallter Fleck 58, d.h. Abtastbereich, einen Durchmesser von etwa 2 mm aufweist. Jedem der Abtastbereiche ist als Ort der Mittelpunkt des Abtastbereiches zugeordnet In Fig. 4 sind die Abtastbereiche der Übersichtlichkeit halber verkleinert dargestellt.

Die Ultraschallsender und -empfänger 52 bzw. 54 sind in zu dem Wertdokument 12 in dem Transportpfad 36 parallelen Ebenen so angeordnet, daß Werte für die Ultraschalltransmission für sich parallel zu der Transportrichtung T erstreckende streifen- bzw. spurförmige Erfassungsbereiche 60 erfaßbar sind, wie in Fig. 4 für eine Momentaufnahme während der Erfassung dargestellt.

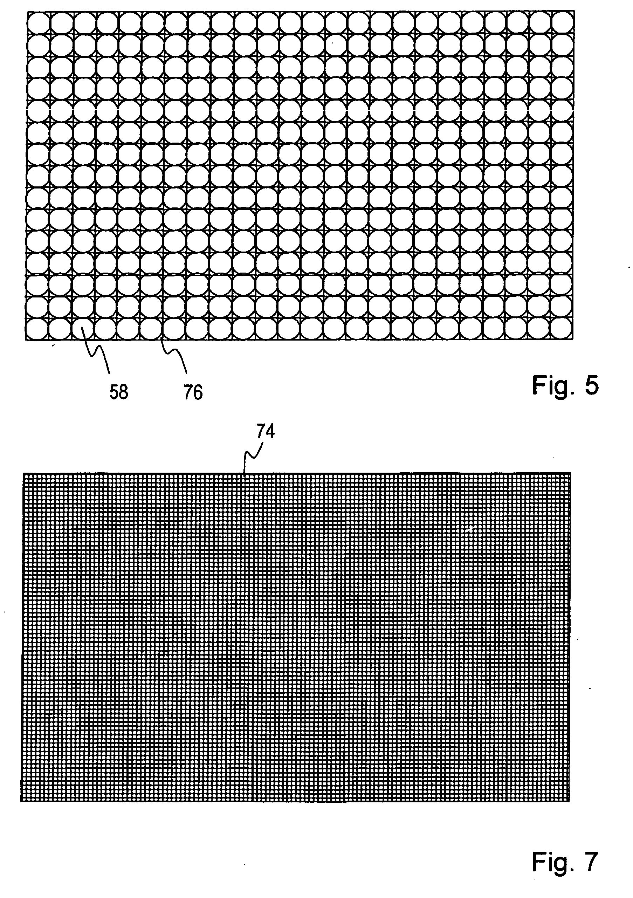

Insgesamt kann sich damit eine für ein Wertdokument 12 schematisch in Fig. 5 dargestellte Verteilung von Abtastbereichen 58 bzw. Orten ergeben, für die Transmissionswerte erfaßbar sind, wenn das Wertdokument 12 mit konstanter geeignet vorgegebener Geschwindigkeit durch die Ultraschallstrecken 56 transportiert wird und während des Transports in vorgegebenen Zeitabständen Transmissionswerte erfaßt werden. In diesem Ausführungsbeispiel erfolgt die Ansteuerung unabhängig von dem Eintritt eines Wertdokuments 12 in den Erfassungsbereich des Transmissionsultraschallsensors 44. Zur Unterdrückung eines unerwünschten Empfangs von Ultraschallpulsechos kann der jeweilige Ultraschallempfänger für eine Ultraschallstrecke gegenüber dem Zeitpunkt der Abgabe des Ultraschallpulses durch den Ultraschallsender für die Ultraschallstrecke um etwas weniger als die Pulslaufzeit für die Ultraschallstrecke verzögert eingeschaltet und vor der doppelten Pulslaufzeit seit der Abgabe wieder abgeschaltet werden.

Es ergibt sich so eine regelmäßige Anordnung der Abtastbereiche 58 bzw. Orte auf dem Wertdokument 12, im Beispiel eine Anordnung auf einem Rechteckgitter. Die Anordnung der Ultraschallsender und -empfänger 52 bzw. 54 ist so gewählt, daß der Abstand aufeinander folgender Orte in wenigstens einem der Streifen bzw. Erfassungsbereiche 60 kleiner als 1 cm ist.

Der Sensor 44 verfügt im Ausführungsbeispiel insbesondere über vierundzwanzig Ultraschallsender /-empfänger-Paare bzw. Ultraschallstrecken 56, die so angeordnet sind, daß die Erfassungsbereiche 60 bzw. die Spuren eine Breite von etwa 2 mm aufweisen. Die Ultraschallortsauflösung liegt daher auch bei 2 mm.

Bedingt durch die zur Erfassung der Ultraschalltransmission benötigte Zeit und die gegebenenfalls hohe Transportgeschwindigkeit des Wertdokuments können die Flecken, anders als in der nur schematischen Darstellung in den Figuren in Transportrichtung länglich, d.h. insgesamt eher elliptisch sein.

Zur Erfassung der Transmissionswerte erfaßt die Steuer- und Auswerteeinrichtung 46 in konstanten Zeitabständen die Sensorsignale der Ultraschallempfänger 54, die die Intensität bzw. Leistung einzelner empfangender Ultraschallpulse als Funktion der Zeit und damit wegen der konstanten Transportgeschwindigkeit auch des Ortes wiedergeben. Anhand dieser Signale ermittelt die Steuer- und Auswerteeinrichtung 46 auch das Eintreten eines Wertdokuments in den Erfassungsbereich des Sensors 44. Die Transmissionswerte sind dabei unter der Annahme einer grundsätzlich konstanten Sendeleistung der Ultraschallsender 52 einfach durch die empfangenen Ultraschallpulsenergien gegeben. In anderen Ausführungsbeispielen ist es jedoch auch möglich, die empfangenen Ultraschallpulsenergien durch eine vorgegebene oder gemessene Ultraschallpulsenergie gesendeter Pulse zu dividieren und damit normierte Transmissionsmeßwerte zu erhalten.

Die ermittelten Transmissionsmeßwerte werden den Orten, für die sie erfaßt wurden, zugeordnet gespeichert. Dies kann beispielsweise in der Art erfolgen, daß für jeden der Erfassungsbereiche 60 getrennt die Transmissionswerte in der zeitlichen Reihenfolge ihrer Erfassung in dem Speicher 50 gespeichert werden. Der Erfassungsbereich 60 entspricht dann einer Koordinate in einer Richtung quer zur Transportrichtung und die Stellung in der Reihe entlang des Erfassungsbereichs 60 einer Koordinate in Transportrichtung T. Ein Index, der die Stellung in der Reihe angibt, stellt dann zusammen mit der Vorschrift für die Umsetzung von Orten in die Reihe die Ortsinformation dar.

Die Frequenz, mit der die Ultraschallpulse nacheinander abgegeben werden, und Transportgeschwindigkeit der Banknote sind so gewählt, daß entlang der Transportrichtung der Banknote in jedem Erfassungsbereich 60 wenigstens fünf Transmissionswerte erfaßt werden. Im Beispiel werden Transmissionswerte im Abstand von 3 mm, vorzugsweise 2 mm, entlang der Transportrichtung erfaßt.

Der in Fig. 6 genauer, aber nur schematisch in einer Ansicht quer zu einer Transportebene der Wertdokumente dargestellte optische Transmissionssensor 42 umfaßt unter anderem auf der einen Seite des Transportpfades bzw. der Transportebene, in der das Wertdokument durch den optischen Transmissionssensor 42 transportiert wird, eine Beleuchtungseinrichtung 62 zur Beleuchtung eines Erfassungsbereichs 64 mit optischer Strahlung in wenigstens einem vorgegebenen Wellenlängenbereich, im Beispiel mit weißem Licht und IR-Strahlung. Auf der anderen Seite des Transportpfades besitzt der Transmissionssensor 42 eine Zeilenkamera 66 zur Erfassung von aus dem Erfassungsbereich kommender optischer Strahlung in vorgegebenen Wellenlängenbereichen und eine Abbildungsoptik 68 zur Abbildung des Erfassungsbereichs auf die Zeilenkamera 66, d.h. zur Fokussierung der aus dem Erfassungsbereich 64 kommenden optischen Strahlung auf die Zeilenkamera 66. Ferner verfügt der Transmissionssensor 42 über eine Sensorauswerteeinrichtung 70, die Signale der Zeilenkamera 66 empfängt und eine Vorauswertung durchführt.

Die Wertdokumente werden in der Transportebene, die in Fig. 6 orthogonal zur Zeichenebene parallel zur Transportrichtung T verläuft, durch den Erfassungsbereich 64 transportiert. Die Zeilenkamera 66 verfügt über wenigstens eine Zeile von im folgenden als Sensorelementen bezeichneten Erfassungselementen 72, im Beispiel vier Zeilen von Sensorelementen. Vor jeder Zeile ist ein Filter angeordnet, mittels dessen die aus dem Erfassungsbereich 64 auf die Zeile fallende Strahlung gefiltert wird. Im Beispiel sind Filter für rotes, grünes und blaues Licht und infrarote Strahlung vorgesehen. Da die Zeilen bis auf die Ausbildung der nicht gezeigten Filter gleich ausgebildet sind, werden im Folgenden nur eine Zeile und die Verarbeitung der Signale der Sensorelemente der Zeile weiter beschrieben. Jedes der Sensorelemente ist mit der Sensorauswerteeinrichtung 70 über eine Signalverbindung verbunden, über die die Auswerteeinrichtung 70 die Signale der Sensorelemente erfaßt, bzw. diese ausliest.

Während des Vorbeitransports des Wertdokuments mit der vorgegebenen Transportgeschwindigkeit werden in gleichen aufeinanderfolgenden Zeitintervallen mittels der Sensorelemente einer jeweiligen Zeile Intensitäten der jeweils auf die Sensorelemente fallenden optischen Strahlung erfaßt und entsprechende Sensorsignale gebildet. Jedem Sensorelement entspricht dabei ein Pixel einer Pixelzeile des Bildes des Wertdokuments für die jeweilige Farbe bzw. IR. Die Pixelreihen werden entsprechend der Reihenfolge ihrer Erfassung aneinandergereiht, so daß sich ein optisches Bild des Wertdokuments ergibt, das durch die Pixel der aneinandergereihten Pixel gebildet wird. Die Pixeldaten für ein Pixel umfassen dann Werte, die die erfaßten Intensitäten in den vier Wellenlängenbereichen wiedergeben, sowie Daten, die den Ort des Pixels in dem Bild bzw. den entsprechenden Ort auf dem Wertdokument wiedergeben. Der Transmissionssensor 42 ist so eingerichtet, daß bei der Transportgeschwindigkeit, mit der Wertdokumente durch diesen hindurchtransportiert werden, die Pixel quadratisch sind bzw. auf einem Quadratgitter liegen. Die Auflösung des optischen Bildes ist durch den Abstand der nächstbenachbarten Pixel voneinander gegeben. Der Abstand zweier Pixel ist der Abstand zweier vorgegebener Punkte, die jeweils für die Pixel in sich entsprechender Weise vorgegeben sind, beispielsweise deren linke untere Ecken oder in diesem Ausführungsbeispiel die Mittelpunkte, denen auch die Ortsinformation entspricht. Im vorliegenden Beispiel liegt die Ortsauflösung bei etwa 0,2 mm. In Fig. 7 ist schematisch ein Wertdokument mit den Pixeln 74 des Transmissionsbildes gezeigt, wobei allerdings zur Übersichtlichkeit der Darstellung die Ortsauflösung reduziert dargestellt ist.

Bei dem im Folgenden geschilderten Verfahren werden auflösungsreduzierte optische Bilder gebildet, deren Ortsauflösung der der Ultraschalldaten entspricht und die auflösumgsreduzierte Pixel aufweisen, die Orten zugeordnet sind, denen auch Ultraschalldaten zugeordnet sind. Im Beispiel wird davon ausgegangen, daß als Orte für die Ultraschalldaten jeweils die Mittelpunkte der Flecken 58 verwendet werden. Auflösungsreduzierte optische Bilder mit der gleichen Ortsauflösung wie die Ultraschalldaten werden dann durch auflösungsreduzierte Pixel 76 gebildet, deren Fläche jeweils durch einen Bereich, im Beispiel ein Rechteck, der Einfachheit halber in den Figuren als Quadrat dargestellt, gebildet wird, dessen Mittelpunkt den jeweiligen Ort der Ultraschalldaten bildet und dessen Ausdehnung so gewählt ist, daß er den jeweiligen Flecken 58 möglichst eng umschließt. Dies ist in Fig. 5 veranschaulicht. Die Pixel brauchen dabei nicht unbedingt unmittelbar aneinanderzugrenzen, doch ist dies bevorzugt.

Wie in Fig. 8 schematisch veranschaulicht besitzen in diesem Beispiel Wertdokumente des vorgegebenen Typs in einem vorgegebenen Sicherheitsmerkmalsbereich 78 ein Balkenwasserzeichen 80, das durch ein Muster von Dickenvariationen des Wertdokumentsubstrats und damit des Flächengewichts gegeben ist. Die Dickenvariationen führen zu einer entsprechenden Variation der optischen Transmission. Der Einfachheit halber wird angenommen, daß im Bereich des Wasserzeichens kein Druckbild vorhanden ist. In Fig. 8 sollen die gepunktet dargestellten Bereiche Bereiche reduzierter Dicke des Wertdokuments und damit einhergehender erhöhter optischer und Ultraschalltransmission darstellen.

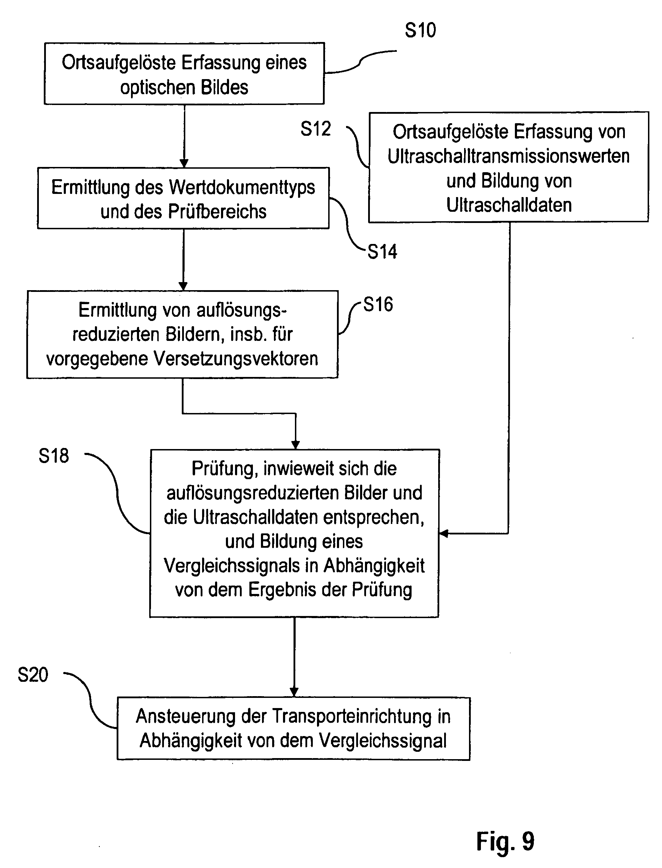

Ausgehend von den für das Wertdokument erfaßten Ultraschalldaten bzw. Ultraschalltransmissionsdaten, d. h. als Funktion des Ortes vorliegenden Ultraschalltransmissionswerten, und den Pixeldaten des optischen Bildes führt die Vorrichtung bzw. die Steuer- und Auswerteeinrichtung 46, genauer der Prozessor 48 nun bei der Abarbeitung von Programmcode des in dem Speicher 50 gespeicherten Computerprogramms folgendes Verfahren zum Prüfen eines Wertdokuments eines vorgegebenen Typs auf das Vorhandensein oder Fehlens eines Wasserzeichens aus. Die ersten Schritte S10 und S12 werden allerdings teilweise durch den Ultraschallsensor 44 und den optischen Transmissionssensor 42 durchgeführt. Das Verfahren ist grob schematisch in Fig. 9 als Ablaufdiagramm veranschaulicht. Gezeigt ist ein Verfahrensabschnitt, der für jedes geprüfte Wertdokument durchlaufen wird.

In Schritt S10 wird mittels des oben beschriebenen optischen Transmissionssensors 42 ein Transmissionsbild des Wertdokuments mit 3 Farb- und einem Infrarotkanal erfaßt, das durch die bereits beschriebenen Pixeldaten für die Pixel des Bildes gegeben ist.

In Schritt S12 wird mittels des oben beschriebenen Transmissionsultraschallsensors 44 die Ultraschalltransmission ortsaufgelöst unter Bildung von ortsabhängigen Ultraschallmeßdaten erfaßt. Die Meßdaten stellen die Intensität des transmittierten Ultraschalls und damit die Ultraschalltransmission in Abhängigkeit von dem Ort dar. Sie werden in dem Speicher 50 der Steuer- und Auswerteeinrichtung 46 zwischengespeichert.

Die Schritte S10 und S12 können teilweise gleichzeitig oder in geeigneter Weise nacheinander durchgeführt werden.

Im Beispiel sind die Steuer- und Auswerteeinrichtung 46 und das mittels dieser bzw. wenigstens teilweise von dieser ausgeführte Verfahren zur Prüfung von Wertdokumenten des vorgegebenen Wertdokumenttyps, hier gegeben durch die Währung und Stückelung des Wertdokuments, ausgelegt. Wertdokumente des vorgegebenen Wertdokuments sind von Wertdokumenten anderer Typen an Hand ihres in den Figuren nicht gezeigten Druckbildes unterscheidbar.

In Schritt S14 ermittelt die Steuer- und Auswerteeinrichtung 46 in Abhängigkeit von Meßdaten, die von dem Remissionssensor 40 erfaßt werden, und/oder von dem mittels des Transmissionssensors 42 erfaßten Bildes den Typ des Wertdokuments sowie dessen Lage. Verfahren hierzu sind dem Fachmann bekannt. In Abhängigkeit von dem Wertdokumenttyp und je nach Wertdokument der ermittelten Lage ermittelt die Steuer- und Auswerteeinrichtung dann den dem jeweiligen Wertdokumenttyp zugeordneten Sicherheitsmerkmalsbereich 78, in dem die Orte der zur weiteren Prüfung herangezogenen Ultraschalldaten bzw. Ultraschalltransmissionsmeßwerte liegen müssen, und damit die entsprechenden Ultraschalldaten.

In Schritt S16 ermittelt die Steuer- und Auswerteeinrichtung 46 aus dem erfaßten Bild auflösungsreduzierte optische Bilder, die eine Ortsauflösung aufweisen, die der der Ultraschalldaten entspricht.

Dazu wird in einem ersten Teilschritt zur Glättung der Pixeldaten des erfaßten Bildes eine Tiefpaßfilterung der Pixeldaten des erfaßten Bildes durchgeführt, bei der die Pixeldaten für jeweils einen Ort durch den Mittelwert der Pixeldaten über den jeweiligen Ort und die benachbarten acht Pixel durchgeführt wird.

Weiter werden in einem zweiten Teilschritt die Pixeldaten dahingehend beschränkt, daß nur die Anteile verwendet werden, die die IR-Transmission beschreiben. In anderen Ausführungsbeispielen, könnten die Pixeldaten auch dahingehend geändert werden, daß sie die sich aus den Farbanteilen ergebende Helligkeit wiedergeben.

In einem dritten Teilschritt werden dann die auflösungsreduzierten Bilder selbst ermittelt.

Dazu werden zunächst die Pixeldaten des erfaßten Bildes und die Ultraschalldaten dahingehend abgeglichen, daß jeweils die Ortsinformation in demselben Bezugssystem bzw. Koordinatensystem auf dem Wertdokument angegeben ist. Genauer wird unter Verwendung des bekannten Abstands des optischen Transmissionssensors und des Ultraschalltransmissionssensors und der vorgegebenen Transportgeschwindigkeit sowie der verwendeten Abtastraten der beiden Sensoren ermittelt, an welchem Ort in dem erfaßten Bild des Transmissionssensors die den Ultraschalldaten zugeordneten Orte liegen.

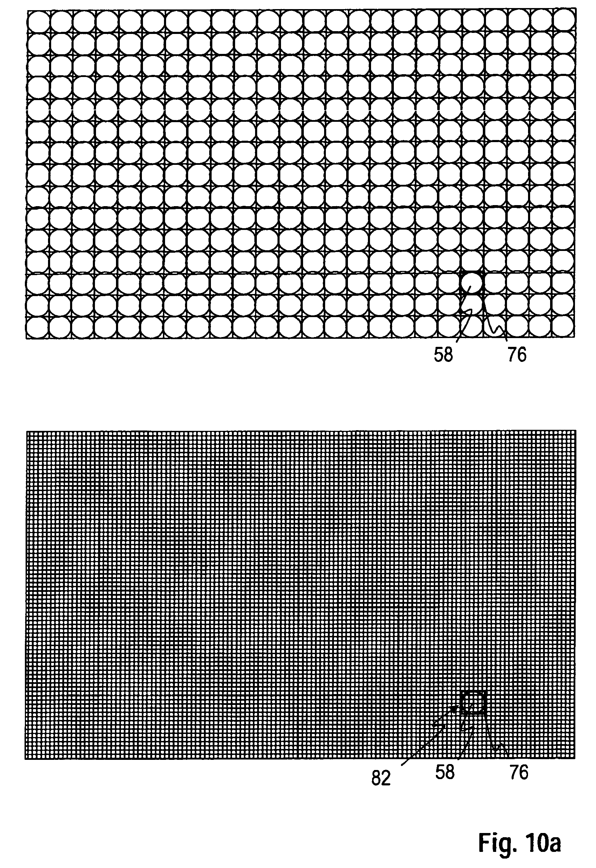

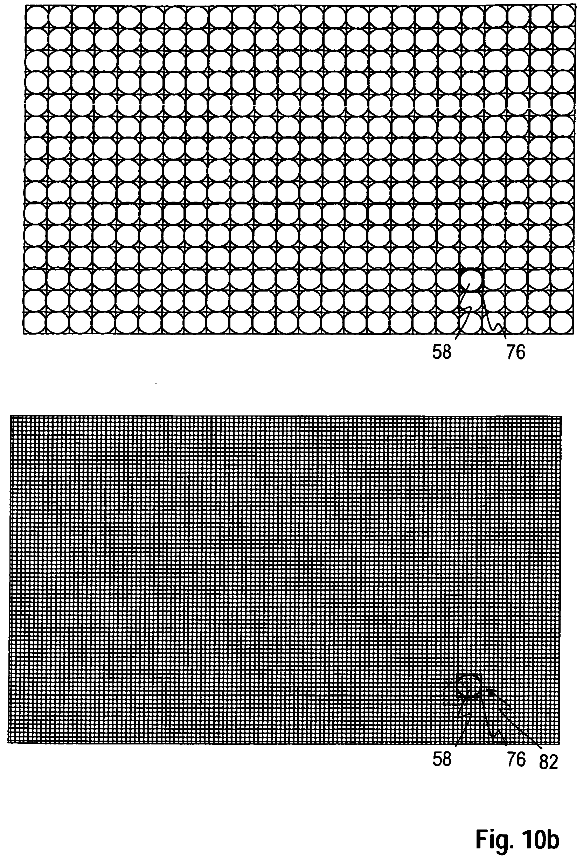

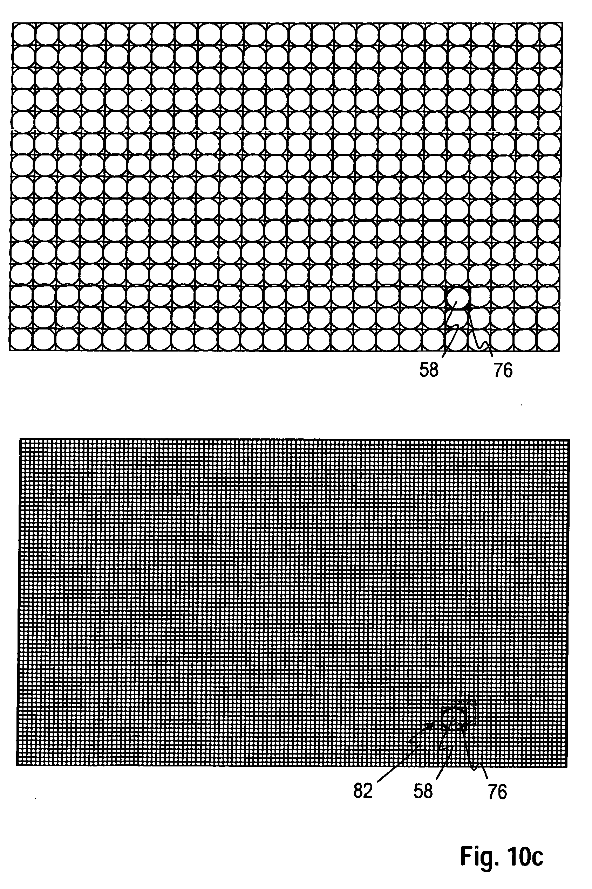

Die auflösungsreduzierten Pixeldaten der auflösungsreduzierten Bilder ergeben sich aus den in dem ersten Teilschritt ermittelten Pixeldaten von Pixelblöcken in dem erfaßten Bild. Ein den Ultraschalldaten jeweils zugeordneter Ort liegt dabei in der geometrischen Mitte des Pixelblocks. Die Anzahl der Pixel des Pixelblocks ergibt sich aus dem Verhältnis v der Ortsauflösung des erfaßten Bildes und der Ultraschalldaten sowie der Fläche der Flecken bzw. Ultraschallabtastbereiche 58. Dieses Verhältnis v liegt im vorliegenden Beispiel bei 10, zur Veranschaulichung in Fig. 10 a bis c wird der Übersichtlichkeit halber jedoch ein Verhältnis von 5 verwendet. Für jeden Ort, dem Ultraschalldaten zugeordnet sind, wird aus einem rechteckigen Pixelblock, der den jeweiligen Abtastbereich möglichst eng umschließt und dessen geometrischer Mittelpunkt dem Ort am nächsten liegt, ein Mittelwert der Pixeldaten aus dem zweiten Teilschritt ermittelt. Die Größe des Abtastbereichs wird vorher durch Versuche oder Simulationen ermittelt, so daß auch die Form und Größe der Pixelblöcke vorab festliegt.

Dies geschieht zum einen für das erfaßte Bild ohne einen weiteren Versatz, d.h. für einen Ort, dem Ultraschalldaten zugeordnet sind, wird ein Pixelblock verwendet, in dessen geometrischem Zentrum der Ort liegt. Zum anderen werden für vorgegebene Versetzungsvektoren auflösungsreduzierte Bilder ermittelt. Bei diesen ist das geometrische Zentrum des Pixelblocks gegenüber dem Ort, dem die Ultraschalldaten zugeordnet sind, um den Versetzungsvektor versetzt. Im vorliegenden Beispiel liegen die Versetzungsvektoren auf dem durch die Pixel des erfaßten Bildes gebildeten Gitter. Werden die Versetzungsvektoren durch die Komponenten in den Richtungen x und y des Gitters dargestellt, werden alle Versetzungsvektoren gebildet, deren x- Komponente in Einheiten von Pixeln zwischen dem negativen des halben oben genannten Verhältnisses der Ortsauflösungen und dem halben oben genannten Verhältnis der Ortsauflösungen liegt. Gleiches gilt für die y-Komponenten. Bezeichnen also a und b die Kantenlängen der rechteckigen Pixel in dem erfaßten Bild, haben die Versetzungsvektoren die Komponenten (x,y)=(i*a,j*b), mit - int(v/2) < i, j < int(v/2), wobei i,j ganze Zahlen ungleich Null sind und für eine Zahl z mit int(z) die ganze Zahl bezeichnet ist, die den geringsten Abstand zu z hat. Veranschaulichungen sind in den Figuren 10 a bis 10c gezeigt, die Pixel sind quadratisch, es ist also a=b. Jede dieser Figuren entspricht der Kombination der Figuren 5 und 7, d. h. der obere Teil zeigt die Lage der Orte der Ultraschalldaten bzw. die Ultraschallabtastbereiche und die auflösungsreduzierten Pixel des auflösungsreduzierten Bildes, der untere Teil die Pixel des erfaßten optischen Bildes des Wertdokuments. In den oberen Teilen ist jeweils ein auflösungsreduziertes Pixel mit einem entsprechenden Ultraschallabtast- bzw. -meßbereich fett gezeichnet. Die unteren Teile der Figuren 10a bis 10c zeigen für diesen den durch das fett gezeichnete Pixel gekennzeichneten Bereich bzw. Pixelblock 82, dessen Pixel bzw. Pixeldaten des erfaßten Bildes zur Ermittlung des auflösungsreduzierten Pixels verwendet werden. In Fig. 10a besteht kein Versatz zwischen Ultraschalldaten und dem erfaßten Bild, in den Figuren 10b und 10c jedoch schon. In den Figuren 10b und 10c ist der Versatz dadurch erkennbar, daß der Pixelblock aus Fig. 10a nochmals gestrichelt dargestellt ist.

In Schritt S18 prüft die Steuer- und Auswerteeinrichtung 46 dann, inwieweit oder ob sich die auflösungsreduzierten Bilder und die Ultraschalldaten für den Sicherheitsmerkmalsbereich entsprechen. Dazu wird für jedes der auflösungsreduzierten Bilder die normierte Kreuzkorrelation der Pixeldaten des jeweiligen auflösungsreduzierten Bildes und der Ultraschalldaten, d. h. der Meßwerte, ermittelt. Bezeichnen u(X) und t(X) die Ultraschalltransmission bzw. die optische Transmission am Ort X in dem Sicherheitsmerkmalsbereich, wie sie durch die Ultraschalldaten bzw. die auflösungsreduzierten Bilder gegeben sind, wird unter der Kreuzkorrelation der Wert

$$\frac{\sum_{X} u(X) \bullet t(X)}{\sqrt{\sum_{X} u^2(X)} \sqrt{\sum_{X} t^2(X)}}$$

verstanden.

Danach wird das Maximum der ermittelten normierten Kreuzkorrelationen gesucht und mit einem vorgegebenen Schwellwert verglichen, der durch Untersuchung von vorgegebenen echten Referenzwertdokumenten des vorgegebenen Wertdokumenttyps und vorzugsweise auch Fälschungen solcher Wertdokumente ermittelt wurde.

Es wird dann ein Vergleichssignal in Abhängigkeit von dem Ergebnis der Prüfung gebildet Liegt das Maximum über dem Schwellwert, wird ein Vergleichssignal gebildet, das darstellt, daß kein Fälschungsverdacht besteht. Andernfalls wird ein Vergleichssignal gebildet, das darstellt, daß ein Hinweis auf eine Fälschung gefunden wurde. Die Verwendung der Versetzungsvektoren und der diesen zugeordneten auflösungsreduzierten Bilder hat den Vorteil, daß durch den Transport und eine nicht perfekte Ermittlung der relativen Lage des optischen Transmissionssensors und des Ultraschalltransmissionssensors bedingte Einflüsse drastisch reduziert und ein besserer Vergleich erzielt werden kann.

In Schritt S20 wird dann die Transporteinrichtung in Abhängigkeit von dem Vergleichssignal angesteuert. Dazu verwendet die Steuereinrichtung das Vergleichssignal und - in diesem Beispiel - entsprechende Signale der anderen Sensoren, die darstellen, ob aus den Pixeldaten der optischen Sensoren ermittelt wurde, daß für das geprüfte Wertdokument ein Hinweis auf ein Fälschung erkannt wurde. Wenn eines der Signale das Vorliegen eines Hinweises auf eine Fälschung darstellt, steuert die Steuer- und Auswerteeinrichtung 46 die Transporteinrichtung 18 durch Abgabe wenigstens eines Steuersignals so an, daß als nicht echt erkannte Wertdokumente in ein vorgegebenes Ausgabefach für als Fälschung erkannte Wertdokumente befördert werden, andere Wertdokumente aber in ein anderes Ausgabefach transportiert werden.

Bei anderen Ausführungsformen können die Ultraschallstrecken gegenüber der Ebene der zu untersuchenden Banknote auch geneigt sein, um bei der Verwendung von Ultraschallpulsen den Einfluß von Echos zu vermeiden. Weiter kann der Ultraschall statt in Pulsen auch kontinuierlich abgegeben werden. In diesem Fall sind die Ultraschallstrecken gegenüber der zu untersuchenden Banknote vorzugsweise ebenfalls geneigt, um das Auftraten von stehenden Wellen zu vermeiden.

Darüber hinaus können sich andere Ausführungsbeispiele von den zuvor beschriebenen dadurch unterscheiden, daß die Ultraschallwandler entlang einer quer zur Transportrichtung verlaufende Zeile abgeordnet sind.

Andere Ausführungsbeispiele unterscheiden sich von den zuvor geschilderten Ausführungsbeispielen dadurch, daß die auflösungsreduzierten Bilder nur für den Sicherheitsmerkmalsbereich ermittelt werden. Auch brauchen dann die Ultraschalldaten nur für diesen Bereich erfaßt zu werden.

In anderen Ausführungsbeispielen kann die Ansteuerung der Transporteinrichtung auch allein in Abhängigkeit von dem Vergleichssignal erfolgen.

**Patentansprüche**

1. Verfahren zur Prüfung eines vorgegebenen Sicherheitsmerkmals (80) eines Wertdokuments(12), das in einem vorgegebenen Sicherheitsmerkmalsbereich (78) des Wertdokuments (12) vorliegt, vorzugsweise eines Wasserzeichens (80), bei dem Pixeldaten erfaßt werden, die ein optisches Bild wenigstens des Sicherheitsmerkmalsbereichs (78) des Wertdokuments (12) mit einer vorgegebenen optischen Ortsauflösung ortsaufgelöst beschreiben, Ultraschalldaten erfaßt werden, die mit einer vorgegebenen Ultraschallortsauflösung ortsaufgelöst eine Ultraschalleigenschaft des Wertdokuments (12) wenigstens in dem Sicherheitsmerkmalsbereich (78) beschreiben, wobei die Ultraschallortsauflösung geringer ist als die optische Ortsauflösung, aus den Pixeldaten erste auflösungsreduzierte Pixeldaten für auflösungsreduzierte Pixel (76) eines ersten auflösungsreduzierten Bildes ermittelt werden, die ein auflösungsreduziertes optisches Bild wenigstens des Sicherheitsmerkmalsbereichs (78) des Wertdokuments (12) beschreiben, dessen optische Ortsauflösung der Ultraschallortsauflösung entspricht, so daß den Ultraschalldaten jeweils zugeordneten Orten erste auflösungsreduzierte Pixeldaten zugeordnet sind, und wenigstens geprüft wird, inwieweit sich die ersten auflösungsreduzierten Pixeldaten und die Ultraschalldaten entsprechen.

2. Verfahren nach Anspruch 1, bei dem wenigstens in Abhängigkeit von dem Ergebnis der Prüfung ein Vergleichssignal gebildet wird, das wiedergibt, ob ein Hinweis ermittelt wurde, daß das Sicherheitsmerkmal (80) vorhanden ist, oder ein Hinweis ermittelt wurde, daß das Sicherheitsmerkmal (80) nicht vorhanden ist.

3. Verfahren nach Anspruch 1 oder 2, bei dem verschiedene Versetzungsvektoren für das optische Bild vorgegeben werden, für jeden der Versetzungsvektoren aus den Pixeldaten des optischen Bildes auflösungsreduzierte Pixeldaten für ein dem Versetzungsvektor zugeordnetes, weiteres auflösungsreduziertes Bild ermittelt werden, die ein auflösungsreduziertes optisches Bild des Sicherheitsmerkmalsbereichs (78) des Wertdokuments (12) beschreiben, dessen optische Ortsauflösung der Ultraschallortsauflösung entspricht, so daß den Ultraschalldaten jeweils zugeordneten Orten für den Sicherheitsmerkmalsbereich (78) auflösungsreduzierte Pixeldaten des dem Versetzungsvektor zugeordneten weiteren auflösungsreduzierten Bildes zugeordnet sind, wobei die zur Ermittlung der weiteren auflösungsreduzierten Pixeldaten für einen jeweiligen Ort verwendeten Pixeldaten des optischen Bildes Pixeldaten für Pixel sind, die gegenüber den zur Ermittlung der ersten auflösungsreduzierten Pixeldaten für den jeweiligen Ort verwendeten Pixeln des optischen Bildes um den vorgegebenen Versetzungsvektor versetzt sind, und weiter geprüft wird, inwieweit sich die weiteren auflösungsreduzierten ortsaufgelösten Pixeldaten für die den Versetzungsvektoren zugeordneten auflösungsreduzierten Bilder und die ortsaufgelösten Ultraschalldaten entsprechen, und das Vergleichssignal zusätzlich in Abhängigkeit von der weiteren Prüfung gebildet wird.

4. Verfahren nach Anspruch 3, bei dem die Versetzungsvektoren auf einem durch die Pixel (74) des optischen Bildes gebildeten Gitter liegen.

5. Verfahren nach einem der vorhergehenden Ansprüche, bei dem zum Prüfen, inwieweit sich die auflösungsreduzierten Pixeldaten und die Ultraschalldaten entsprechen, ein Wert einer, vorzugsweise normierten, Kreuzkorrelation zwischen den auflösungsreduzierten Pixeldaten und den Ultraschalldaten ermittelt wird, und
vorzugsweise bei der Bildung des Vergleichssignals der größte Wert der Kreuzkorrelationen ermittelt, der ermittelte größte Wert mit einem vorgegebenen Schwellwert verglichen und in Abhängigkeit von dem Vergleich mit dem Schwellwert das Vergleichssignal gebildet wird.

6. Verfahren nach einem der vorhergehenden Ansprüche, bei dem zur Ermittlung der auflösungsreduzierten Pixeldaten für ein auflösungsreduziertes Pixel (76) bzw. weiteres auflösungsreduziertes Pixel (76) Pixeldaten für Pixel (74) des optischen Bildes verwendet werden, die einen Pixelblock bilden, dessen größter Durchmesser größer als die dreifache Ortsauflösung des optischen Bildes und kleiner als das 1,2-fache der Ortsauflösung des Ultraschallsensors (44) ist.

7. Verfahren nach einem der vorhergehenden Ansprüche, bei dem vor der Ermittlung der auflösungsreduzierten Pixeldaten eine Glättung der Pixeldaten des optischen Bildes, wenigstens im Sicherheitsmerkmalsbereich (78), vorgenommen wird.

8. Verfahren nach einem der vorhergehenden Ansprüche, bei dem bei der Ermittlung der auflösungsreduzierten Pixeldaten ein einfacher oder gewichteter arithmetischer Mittelwert von Pixeldaten des optischen Bildes gebildet wird.

9. Verfahren nach Anspruch 3 oder einem der Ansprüche 4 bis 8 in Verbindung mit Anspruch 3, bei dem die Anzahl der Versetzungsvektoren größer als ein sechzehntel der Anzahl der Pixel des Pixelblocks, vorzugsweise größer als ein neuntel der Anzahl der Pixel des Pixelblocks, mindestens aber vier ist.

10. Verfahren nach einem der vorhergehenden Ansprüche, bei dem die vorgegebenen Pixeldaten mittels eines optischen Sensors (42) gebildet werden, und die vorgegebenen Ultraschalldaten mittels eines Ultraschallsensors (44) gebildet werden.

11. Computerprogramm zur Prüfung eines Sicherheitsmerkmals (80) eines Wertdokuments (12), das in einem vorgegebenen Sicherheitsmerkmalsbereich (78) des Wertdokuments (12) vorliegt, das Instruktionen umfaßt, bei deren Ausführungen durch eine Datenverarbeitungseinrichtung (46) ein Verfahren nach einem der vorhergehenden Ansprüche ausgeführt wird.

12. Datenträger, auf dem ein Computerprogramm nach Anspruch 10 gespeichert ist.

13. Vorrichtung zur Prüfung eines vorgegebenen Sicherheitsmerkmals (80) eines Wertdokuments (12), das in einem vorgegebenen Sicherheitsmerkmalsbereich (80) des Wertdokuments (12) vorliegt, vorzugsweise eines Wasserzeichens (80), die eine Auswerteeinrichtung (46) aufweist, die zur Ausführung des Verfahrens nach einem der Ansprüche 1 bis 9 ausgebildet ist oder die dazu ausgebildet ist, Pixeldaten zu erfassen, die ein optisches Bild wenigstens des Sicherheitsmerkmalsbereichs (78) des Wertdokuments (12) mit einer vorgegebenen optischen Ortsauflösung ortsaufgelöst beschreiben, Ultraschalldaten zu erfassen, die mit einer vorgegebenen Ultraschallortsauflösung ortsaufgelöst eine Ultraschalleigenschaft des Wertdokuments (12) wenigstens in dem Sicherheitsmerkmalsbereich (78) beschreiben, wobei die Ultraschallortsauflösung geringer ist als die optische Ortsauflösung, aus den Pixeldaten erste auflösungsreduzierte Pixeldaten für auflösungsreduzierte Pixel (76) eines ersten auflösungsreduzierten Bildes zu ermitteln, die ein auflösungsreduziertes optisches Bild wenigstens des Sicherheitsmerkmalsbereichs (78) des Wertdokuments (12) beschreiben, dessen optische Ortsauflösung der Ultraschallortsauflösung entspricht, so daß den Ultraschalldaten jeweils zugeordneten Orten erste reduzierte Pixeldaten zugeordnet sind, wenigstens zu prüfen, inwieweit sich die ersten auflösungsreduzierten Pixeldaten und die Ultraschalldaten entsprechen, und vorzugsweise wenigstens in Abhängigkeit von dem Ergebnis der Prüfung ein Vergleichssignal zu bilden, das wiedergibt, ob ein Hinweis ermittelt wurde, daß das Sicherheitsmerkmal (80) vorhanden ist, oder ein Hinweis ermittelt wurde, daß das Sicherheitsmerkmal (80) nicht vorhanden ist.

14. Vorrichtung nach Anspruch 13, bei der die Auswerteeinrichtung (46) eine Datenverarbeitungseinrichtung und einen Speicher (50), in dem ein Computerprogramm nach Anspruch 10 gespeichert ist, aufweist.

15. Vorrichtung nach Anspruch 13 oder Anspruch 14, die weiter
einen optischen Sensor (42), der dazu ausgebildet ist, für das Wertdokument Pixeldaten zu erzeugen, die ein mit einer vorgegebenen optischen Ortsauflösung ortsaufgelöstes optisches Bild des Wertdokuments (12) beschreiben, und
einen Ultraschallsensor (44), der dazu ausgebildet ist, für das Wertdokument (12) Ultraschalldaten zu erzeugen, die mit einer vorgegebenen Ultraschallortsauflösung ortsaufgelöst eine Ultraschalleigenschaft des Wertdokuments (12) wenigstens in dem Sicherheitsmerkmalsbereich (78) beschreiben, wobei die Ultraschallortsauflösung geringer ist als die optische Ortsauflösung, aufweist, und bei der der optische Sensor (42), der Ultraschallsensor (44) und die Auswerteeinrichtung (46) so ausgebildet sind, daß die Auswerteeinrichtung (46) die für das Wertdokument (12) gebildeten Pixeldaten als Pixeldaten und die für das Wertdokument (12) gebildeten Ultraschalldaten als Ultraschalldaten bei der Durchführung des Verfahrens verwendet.

## Claims

1. A method for checking a specified security feature (80) of a value document (12) which is present in a specified security-feature region (78) of the value document (12), preferably a watermark (80), wherein there are captured pixel data which describe, spatially resolved with a specified optical spatial resolution, an optical image at least of the security-feature region (78) of the value document (12), there are captured ultrasound data which describe an ultrasonic property of the value document (12) at least in the security-feature region (78), spatially resolved with a specified ultrasonic spatial resolution, the ultrasonic spatial resolution being lower than the optical spatial resolution, from the pixel data there are established first reduced-resolution pixel data for reduced-resolution pixels (76) of a first reduced-resolution image which describe a reduced-resolution optical image at least of the security-feature region (78) of the value document (12), whose optical spatial resolution corresponds to the ultrasonic spatial resolution, so that locations respectively associated with the ultrasound data have associated therewith first reduced-resolution pixel data, and it is at least checked to what extent the first reduced-resolution pixel data and the ultrasound data correspond to each other.

2. The method according to claim 1, wherein at least in dependence on the result of the check there is formed a comparison signal representing whether an indication was established that the security feature (80) is present, or an indication was established that the security feature (80) is not present.

3. The method according to claim 1 or 2, wherein different displacement vectors are specified for the optical image, for each of the displacement vectors there are established from the pixel data of the optical image reduced-resolution pixel data for a further reduced-resolution image associated with the displacement vector, which describe a reduced-resolution optical image of the security-feature region (78) of the value document (12), whose optical spatial resolution corresponds to the ultrasonic spatial resolution, so that locations respectively associated with the ultrasound data have associated therewith for the security-feature region (78) reduced-resolution pixel data of the further reduced-resolution image associated with the displacement vector, the pixel data of the optical image that are employed for establishing the further reduced-resolution pixel data for a respective location being pixel data for pixels that are displaced by the specified displacement vector relative to the pixels of the optical image that are employed for establishing the first reduced-resolution pixel data for the respective location, and it is further checked to what extent the further reduced-resolution spatially resolved pixel data for the reduced-resolution images associated with the displacement vectors and the spatially resolved ultrasound data correspond to each other, and the comparison signal is formed additionally in dependence on the further check.

4. The method according to claim 3, wherein the displacement vectors lie on a grid formed by the pixels (74) of the optical image.

5. The method according to any of the preceding claims, wherein for checking to what extent the reduced-resolution pixel data and the ultrasound data correspond to each other, there is established a value of a, preferably normalized, cross-correlation between the reduced-resolution pixel data and the ultrasound data, and preferably upon the forming of the comparison signal there is established the greatest value of the cross-correlations, the established greatest value is compared with a specified threshold value, and the comparison signal is formed in dependence on the comparison with the threshold value.

6. The method according to any of the preceding claims, wherein for establishing the reduced-resolution pixel data for a reduced-resolution pixel (76) or further reduced-resolution pixel (76), there are employed pixel data for pixels (74) of the optical image that form a pixel block whose greatest diameter is greater than three times the spatial resolution of the optical image and smaller than 1.2 times the spatial resolution of the ultrasonic sensor (44).

7. The method according to any of the preceding claims, wherein before the establishment of the reduced-resolution pixel data there is performed a smoothing of the pixel data of the optical image, at least in the security-feature region (78).

8. The method according to any of the preceding claims, wherein when establishing the reduced-resolution pixel data there is formed a simple or weighted arithmetic average of pixel data of the optical image.

9. The method according to claim 3 or any of claims 4 to 8 in connection with claim 3, wherein the number of the displacement vectors is greater than one sixteenth of the number of the pixels of the pixel block, preferably greater than one ninth of the number of the pixels of the pixel block, but at least four.

10. The method according to any of the preceding claims, wherein the specified pixel data are formed by means of an optical sensor (42), and the specified ultrasound data are formed by means of an ultrasonic sensor (44).

11. A computer program for checking a security feature (80) of a value document (12) which is present in a specified security-feature region (78) of the value document (12), which comprises instructions upon whose executions by a data-processing device (46) a method according to any of the preceding claims is performed.

12. A data carrier on which a computer program according to claim 10 is stored.

13. An apparatus for checking a specified security feature (80) of a value document (12) which is present in a specified security-feature region (80) of the value document (12), preferably a watermark (80), said apparatus having an evaluation device (46) which is configured for performing the method according to any of claims 1 to 9 or which is configured for capturing pixel data which, spatially resolved with a specified optical spatial resolution, describe an optical image at least of the security-feature region (78) of the value document (12), capturing ultrasound data which describe an ultrasonic property of the value document (12) at least in the security-feature region (78), spatially resolved with a specified ultrasonic spatial resolution, the ultrasonic spatial resolution being lower than the optical spatial resolution, establishing from the pixel data first reduced-resolution pixel data for reduced-resolution pixels (76) of a first reduced-resolution image which describe a reduced-resolution optical image at least of the security-feature region (78) of the value document (12), whose optical spatial resolution corresponds to the ultrasonic spatial resolution, so that locations respectively associated with the ultrasound data have associated therewith first reduced pixel data, at least checking to what extent the first reduced-resolution pixel data and the ultrasound data correspond to each other, and forming preferably at least in dependence on the result of the check a comparison signal which represents whether an indication was established that the security feature (80) is present, or an indication was established that the security feature (80) is not present.

14. The apparatus according to claim 13, wherein the evaluation device (46) has a data-processing device and a memory (50) which stores a computer program according to claim 10.

15. The apparatus according to claim 13 or claim 14, which further has
an optical sensor (42) which is configured for producing, for the value document, pixel data which describe an optical image of the value document (12) that is spatially resolved with a specified optical spatial resolution, and
an ultrasonic sensor (44) which is configured for producing, for the value document (12), ultrasound data which describe an ultrasonic property of the value document (12), spatially resolved with a specified ultrasonic spatial resolution, at least in the security-feature region (78), the ultrasonic spatial resolution being lower than the optical spatial resolution, and wherein the optical sensor (42), the ultrasonic sensor (44) and the evaluation device (46) are so configured that the evaluation device (46) employs the pixel data formed for the value document (12) as pixel data, and the ultrasound data formed for the value document (12) as ultrasound data, when carrying out the method.

## Revendications

1. Procédé de vérification d'une caractéristique de sécurité (80) prédéterminée d'un document de valeur (12) située dans une zone (78) prédéterminée de caractéristique de sécurité du document de valeur (12), de préférence d'un filigrane (80), dans lequel des données pixel sont saisies, lesquelles décrivent une image optique au moins de la zone (78) de caractéristique de sécurité du document de valeur (12) en résolution spatiale avec une résolution spatiale optique prédéterminée,
des données ultrasoniques sont saisies, lesquelles décrivent en résolution spatiale, avec une résolution spatiale ultrasonique prédéterminée, une caractéristique ultrasonique du document de valeur (12) au moins dans la zone (78) de caractéristique de sécurité, la résolution spatiale ultrasonique étant inférieure à la résolution spatiale optique,
à partir des données pixel, des premières données pixel à résolution réduite pour pixels (76) à résolution réduite d'une première image à résolution réduite sont établies, lesquelles décrivent une image optique à résolution réduite d'au moins la zone (78) de caractéristique de sécurité du document de valeur (12) dont la résolution spatiale optique correspond à la résolution spatiale ultrasonique, de telle sorte que, aux endroits respectivement affectés aux données ultrasoniques, des premières données pixel à résolution réduite sont affectées, et

il est au moins vérifié dans quelle mesure les premières données pixel à résolution réduite et les données ultrasoniques correspondent entre elles.

2. Procédé selon la revendication 1, dans lequel au moins en fonction du résultat de la vérification, un signal de comparaison est formé, lequel traduit si une indication a été établie selon laquelle il y a la caractéristique de sécurité (80), ou si une indication a été établie selon laquelle il n'y a pas la caractéristique de sécurité (80).

3. Procédé selon la revendication 1 ou 2, dans lequel différents vecteurs de déplacement sont prédéterminés pour l'image optique,

pour chacun des vecteurs de déplacement, à partir des données pixel de l'image optique, des données pixel à résolution réduite sont établies pour une image supplémentaire à résolution réduite affectée au vecteur de déplacement, lesquelles décrivent une image optique à résolution réduite de la zone (78) de caractéristique de sécurité du document de valeur (12) dont la résolution spatiale optique correspond à la résolution spatiale ultrasonique, de telle sorte que, aux endroits

respectivement affectés aux données ultrasoniques, pour la zone (78) de caractéristique de sécurité, des données pixel à résolution réduite de l'image supplémentaire à résolution réduite affectée au vecteur de déplacement sont affectées,

les données pixel de l'image optique utilisées pour l'établissement des données pixel supplémentaires à résolution réduite pour un endroit respectif étant des données pixel pour des pixels qui, par rapport aux pixels de l'image optique utilisées pour l'établissement des premières données pixel à résolution réduite pour l'endroit respectif, sont déplacées du vecteur de déplacement prédéterminé, et

il est en outre vérifié dans quelle mesure les données pixel supplémentaires à résolution spatiale à résolution réduite pour les images à résolution réduite affectées aux vecteurs de déplacement et les données ultrasoniques à résolution spatiale correspondent entre elles, et

le signal de comparaison est formé en plus en fonction du résultat supplémentaire.

4. Procédé selon la revendication 3, dans lequel les vecteurs de déplacement se trouvent sur une grille formée par les pixels (74) de l'image optique.

5. Procédé selon une des revendications précédentes, dans lequel, pour vérifier dans quelle mesure les données pixel à résolution réduite et les données ultrasoniques correspondent entre elles, une valeur d'une intercorrélation, de préférence normée, entre les données pixel à résolution réduite et les données ultrasoniques est établie, et

de préférence lors de la formation du signal de comparaison, la valeur la plus élevée des intercorrélations est établie, la valeur la plus élevée établie est comparée avec une valeur seuil prédéterminée et, en fonction de la comparaison avec la valeur seuil, le signal de comparaison est formé.

6. Procédé selon une des revendications précédentes, dans lequel, pour l'établissement des données pixel à résolution réduite, pour un pixel à résolution réduite (76) ou pixel supplémentaire à résolution réduite (76), des données pixel pour pixels (74) de l'image optique sont utilisées, lesquelles forment un bloc de pixels dont le diamètre le plus élevé est supérieur à trois fois la résolution spatiale de l'image optique et inférieur à 1,2 fois la résolution spatiale du capteur ultrasonique (44).

7. Procédé selon une des revendications précédentes, dans lequel, avant l'établissement des données pixel à résolution réduite, un lissage des données pixel de l'image optique est, au moins dans la zone (78) de caractéristique de sécurité, effectuée.

8. Procédé selon une des revendications précédentes, dans lequel, lors de l'établissement des données pixel à résolution réduite, une valeur arithmétique moyenne simple ou pondérée de données pixel de l'image optique est formée.

9. Procédé selon la revendication 3 ou une des revendications de 4 à 8 en corrélation avec la revendication 3, dans lequel le nombre des vecteurs de déplacement est supérieur à un seizième du nombre des pixels du bloc de pixels, de préférence supérieur à un neuvième du nombre des pixels du bloc de pixels, s'élevant toutefois au moins à quatre.

10. Procédé selon une des revendications précédentes, dans lequel les données pixel prédéterminées sont formées au moyen d'un capteur optique (42), et les données ultrasoniques prédéterminées sont formées au moyen d'un capteur ultrasonique (44).

11. Programme informatique destiné à la vérification d'une caractéristique de sécurité (80) d'un document de valeur (12) qui se trouve dans une zone (78) prédéterminée de caractéristique de sécurité du document de valeur (12), lequel comprend des instructions lors de l'exécution desquelles, par un équipement de traitement de données (46), un procédé selon une des revendications précédentes est exécuté.

**12.** Support de données sur lequel un programme informatique selon la revendication 10 est mémorisé.

**13.** Dispositif de vérification d'une caractéristique de sécurité (80) prédéterminée d'un document de valeur (12) qui se trouve dans une zone (80) prédéterminée de caractéristique de sécurité du document de valeur (12), de préférence d'un filigrane (80), qui comporte un équipement d'évaluation (46) conçu pour l'exécution du procédé selon une des revendications de 1 à 9 ou qui est conçu pour saisir des données pixel qui décrivent une image optique au moins de la zone (78) de caractéristique de sécurité du document de valeur (12) en résolution spatiale avec une résolution spatiale optique prédéterminée, pour saisir des données ultrasoniques qui décrivent en résolution spatiale, avec une résolution spatiale ultrasonique prédéterminée, une caractéristique ultrasonique du document de valeur (12) au moins dans la zone (78) de caractéristique de sécurité, la résolution spatiale ultrasonique étant inférieure à la résolution spatiale optique, pour établir, à partir des données pixel, des premières données pixel à résolution réduite pour pixels (76) à résolution réduite d'une première image à résolution réduite qui décrivent une image optique à résolution réduite d'au moins la zone (78) de caractéristique de sécurité du document de valeur (12) dont la résolution spatiale optique correspond à la résolution spatiale ultrasonique, de telle sorte que, aux endroits respectivement affectés aux données ultrasoniques, des premières données pixel réduites sont affectées, pour au moins vérifier dans quelle mesure les premières données pixel à résolution réduite et les données ultrasoniques correspondent entre elles, et pour de préférence au moins, en fonction du résultat de la vérification, former un signal de comparaison qui traduit si une indication a été établie selon laquelle il y a la caractéristique de sécurité (80), ou si une indication a été établie selon laquelle il n'y a pas la caractéristique de sécurité (80).

**14.** Dispositif selon la revendication 13, dans lequel l'équipement d'évaluation (46) comporte un équipement de traitement de données et une mémoire (50) dans laquelle un programme informatique selon la revendication 10 est mémorisé.

**15.** Dispositif selon la revendication 13 ou la revendication 14, qui comporte en outre un capteur optique (42) conçu pour générer pour le document de valeur des données pixel qui décrivent une image optique à résolution spatiale avec une résolution spatiale optique prédéterminée du document de valeur (12), et un capteur ultrasonique (44) conçu pour générer pour le document de valeur (12) des données ultrasoniques qui, avec une résolution spatiale ultrasonique prédéterminée, décrivent en résolution spatiale une caractéristique ultrasonique du document de valeur (12) au moins dans la zone (78) de caractéristique de sécurité, la résolution spatiale ultrasonique étant inférieure à la résolution spatiale optique, et dans lequel le capteur optique (42), le capteur ultrasonique (44) et l'équipement d'évaluation (46) sont conçus de telle façon que l'équipement d'évaluation (46), lors de l'exécution du procédé, utilise en tant que données pixel les données pixel formées pour le document de valeur (12) et utilise en tant que données ultrasoniques les données ultrasoniques formées pour le document de valeur (12).

Fig. 1

Fig. 6

Fig. 8

46

56

52

54

12

⊗ T

**Fig. 2**

**Fig. 3**

52

52

T

T

58

60

12

**Fig. 4**

58  76

Fig. 5

74

Fig. 7

S10

Ortsaufgelöste Erfassung eines
optischen Bildes

S12

Ortsaufgelöste Erfassung von
Ultraschalltransmissionswerten
und Bildung von
Ultraschalldaten

Ermittlung des Wertdokumenttyps
und des Prüfbereichs

S14

Ermittlung von auflösungsreduzierten Bildern, insb. für
vorgegebene Versetzungsvektoren

S16

S18

Prüfung, inwieweit sich die
auflösungsreduzierten Bilder und
die Ultraschalldaten entsprechen,
und Bildung eines
Vergleichssignals in Abhängigkeit
von dem Ergebnis der Prüfung

S20

Ansteuerung der Transporteinrichtung in
Abhängigkeit von dem Vergleichssignal

Fig. 9

58    76

82    58    76

**Fig. 10a**

58    76

58        76  82

**Fig. 10b**

58    76

82    58    76

**Fig. 10c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0210716 A2
- WO 2004055740 A2